# EUROPEAN PATENT SPECIFICATION

(11) **EP 2 955 452 B1**
(45) Date of publication and mention of the grant of the patent: **15.03.2017**
(21) Application number: 14749232.6
(22) Date of filing: 29.01.2014
(51) Int. Cl.: F24F 7/08, F24F 11/00, F24F 12/00

(54) **VENTILATION DEVICE**
VENTILATIONSVORRICHTUNG
DISPOSITIF DE VENTILATION

(30) Priority: 07.02.2013 JP 2013022378
(43) Date of publication of application: 16.12.2015
(73) Proprietor: Daikin Industries, Ltd., Osaka 530-8323 (JP)
(72) Inventor: MATSUGI, Yoshitaka, Osaka-shi, Osaka 530-8323 (JP); KONDOU, Hiroyuki, Osaka-shi, Osaka 530-8323 (JP)
(74) Representative: Global IP Europe Patentanwaltskanzlei
(86) International application number: PCT/JP2014/051942
(87) International publication number: WO 2014/123044

(56) References cited:
- EP-A1- 1 445 549
- EP-A1- 2 093 507
- JP-A- H0 979 634
- JP-A- S61 197 932
- JP-A- S61 295 443
- JP-A- 2003 074 937
- JP-A- 2005 042 955
- JP-A- 2008 196 821
- JP-A- 2011 080 630
- JP-A- 2012 060 701
- JP-B2- 3 203 747

## Description

### TECHNICAL FIELD

The present invention relates to a ventilation device for ventilating a target space.

### BACKGROUND ART

Conventionally, ventilation devices equipped with a supply air fan that takes outside air into an indoor space and an exhaust air fan that exhausts inside air to an outdoor space have been known. For example, in the ventilation device disclosed in patent document 1 (Japanese Laid-open Patent Publication No. 2005-42955), a supply air flow path and an exhaust air flow path are formed inside the ventilation device, with a supply air fan being disposed in the supply air flow path and an exhaust air fan being disposed in the exhaust air flow path.

### SUMMARY OF INVENTION

### <Technical Problem>

In this connection, in a ventilation device equipped with two or more fans such as described above, in a case where one of the fans has abnormally stopped, it is conceivable that the ventilation device will be unable to ventilate the indoor space during the time period until restoration is complete and that high reliability will be unable to be ensured.

Thus, it is a problem of the present invention to provide a ventilation device having superior reliability.

### <Solution to Problem>

A ventilation device pertaining to a first aspect of the present invention is a ventilation device for ventilating a target space and comprises a supply air fan, an exhaust air fan, and a fan control unit. The supply air fan takes inside the target space outside air that is air outside the target space. The exhaust air fan exhausts outside the target space inside air that is air inside the target space. The fan control unit controls the operation of the supply air fan and the exhaust air fan. In a case where a first fan that is either one fan among the supply air fan and the exhaust air fan has abnormally stopped, the fan control unit continues the operation of a second fan that is the remaining fan excluding the first fan from the supply air fan and the exhaust air fan in order to make negative pressure or positive pressure inside the target space.

EP 2 093 507 A1 discloses a ventilation device for ventilating a target space, the ventilation device comprising: a supply air fan that takes inside the target space outside air that is air outside the target space; an exhaust air fan that exhausts outside the target space inside air that is air inside the target space; and a fan control unit configured to control the operation of the supply air fan and the exhaust air fan.

In the ventilation device pertaining to the first aspect of the present invention, in a case where the first fan that is either one fan among the supply air fan and the exhaust air fan has abnormally stopped due to a failure or the like, the fan control unit continues the operation of the second fan to make negative pressure or positive pressure inside the target space. Because of this, the ventilation device can cause the outside air to flow into the target space or cause the inside air to flow out from the target space. That is, even if the first fan abnormally stops due to a failure or the like, the ventilation device can continuously ventilate the target space. Consequently, the reliability of the ventilation device is improved.

A ventilation device pertaining to a second aspect of the present invention is the ventilation device pertaining to the first aspect, further comprising a heating unit and a heating control unit that controls the operation of the heating unit. The heating unit is disposed on a supply air flow path through which passes the outside air taken in by the supply air fan. The heating unit can heat the outside air taken in by the supply air fan. In a case where the first fan has abnormally stopped, the heating control unit stops the heating by the heating unit. In a case where the first fan has abnormally stopped, the fan control unit continues the operation of the second fan in order to make negative pressure inside the target space. The first fan is the supply air fan. The second fan is the exhaust air fan.

In the ventilation device pertaining to the second aspect of the present invention, in a case where the first fan has abnormally stopped, the heating control unit stops the heating by the heating unit, and the fan control unit continues the operation of the second fan in order to make negative pressure inside the target space. Furthermore, the first fan is the supply air fan and the second fan is the exhaust air fan. In this way, by causing the exhaust air fan to continuously operate to make negative pressure inside the target space in a case where the supply air fan has abnormally stopped, the ventilation device can cause the outside air to flow into the target space. For this reason, even if the supply air fan abnormally stops, the ventilation device can continuously ventilate the target space.

A ventilation device pertaining to a third aspect of the present invention is the ventilation device pertaining to the second aspect, wherein the heating unit heats the outside air taken in by the supply air fan by causing heat generated as a result of current being supplied inside the heating unit and the outside air taken in by the supply air fan to exchange heat. In a case where the first fan has abnormally stopped, the heating control unit stops the heating by the heating unit by cutting off the supply of current to the heating unit.

Because of this, the reliability and the safety of the ventilation device equipped with an electric heater are improved.

A ventilation device pertaining to a fourth aspect of the present invention is the ventilation device pertaining to any of the first aspect to the third aspect, further comprising an abnormal stop detection unit. The abnormal stop detection unit detects an abnormal stop of the first fan. In a case where the abnormal stop detection unit has detected an abnormal stop of the first fan, the fan control unit continues the operation of the second fan.

Because of this, in a case where the first fan has abnormally stopped due to a failure or the like, the ventilation device can continuously ventilate the target space with good precision.

A ventilation device pertaining to a fifth aspect of the present invention is the ventilation device pertaining to the fourth aspect, further comprising an outside air temperature sensor. The outside air temperature sensor detects an outside air temperature. The outside air temperature is the temperature of the outside air taken in by the supply air fan. When, in a case where the abnormal stop detection unit has detected an abnormal stop of the first fan, the outside air temperature detected by the outside air temperature sensor is less than a preset first threshold, the fan control unit continues the operation of the second fan for a predetermined amount of time and thereafter stops it.

Because of this, in a case where the first fan has abnormally stopped, a situation where cold air continuously flows into the target space and the indoor temperature drops can be restrained. Consequently, even in a case where the first fan has abnormally stopped, the ventilation device can perform ventilation with superior comfort.

A ventilation device pertaining to a sixth aspect of the present invention is the ventilation device pertaining to the fifth aspect, wherein the fan control unit resumes the operation of the second fan when the outside air temperature detected by the outside air temperature sensor becomes equal to or greater than a preset second threshold.

Because of this, even in a case where the first fan has abnormally stopped, the ventilation device can perform ventilation with superior comfort.

A ventilation device pertaining to a seventh aspect of the present invention is the ventilation device pertaining to any of the fourth aspect to the sixth aspect, further comprising an outside air temperature sensor. The outside air temperature sensor detects an outside air temperature that is the temperature of the outside air taken in by the supply air fan. When, in a case where the abnormal stop detection unit has detected an abnormal stop of the first fan, the outside air temperature detected by the outside air temperature sensor is equal to or greater than a preset second threshold, the fan control unit continues the operation of the second fan. Thereafter, when the outside air temperature detected by the outside air temperature sensor becomes less than a preset first threshold, the fan control unit stops the operation of the second fan after the elapse of a predetermined amount of time.

Because of this, even in a case where the first fan has abnormally stopped, the ventilation device can perform ventilation with superior comfort.

A ventilation device pertaining to an eighth aspect of the present invention is the ventilation device pertaining to any of the first aspect to the seventh aspect, further comprising a heating unit, a heating control unit, and an outside air temperature sensor. The heating unit is disposed on a supply air flow path through which passes the outside air taken in by the supply air fan. The heating unit can heat the outside air taken in by the supply air fan. The heating control unit controls the operation of the heating unit. The outside air temperature sensor detects an outside air temperature that is the temperature of the outside air taken in by the supply air fan. The heating control unit stops the heating by the heating unit when the value of the outside air temperature detected by the outside air temperature sensor falls outside a preset predetermined numerical value range. The fan control unit stops the operation of the supply air fan and the exhaust air fan after the elapse of a predetermined amount of time when the value of the outside air temperature detected by the outside air temperature sensor falls outside the predetermined numerical value range.

Because of this, in the ventilation device equipped with the heating unit and the outside air temperature sensor, safety can be ensured even if the outside air temperature sensor fails.

### <Advantageous Effects of Invention>

In the ventilation device pertaining to the first aspect of the present invention, the reliability of the ventilation device is improved.

In the ventilation device pertaining to the second aspect of the present invention, the reliability and safety of the ventilation device equipped with the heating unit are improved.

In the ventilation device pertaining to the third aspect of the present invention, the reliability and safety of the ventilation device equipped with an electric heater are improved.

In the ventilation device pertaining to the fourth aspect of the present invention, in a case where the first fan has abnormally stopped, the ventilation device can continuously ventilate the target space with good precision.

In the ventilation devices pertaining to the fifth aspect, the sixth aspect and the seventh aspect of the present invention, even in a case where the first fan has abnormally stopped, the ventilation device can perform ventilation with superior comfort.

In the ventilation device pertaining to the eighth aspect of the present invention, in the ventilation device equipped with the heating unit and the outside air temperature sensor, safety can be ensured in a case where the outside air temperature sensor has failed.

### BRIEF DESCRIPTION OF DRAWINGS

FIG. 1 is an overall configuration diagram of an air conditioning system pertaining to an embodiment of the present invention;
FIG. 2 is a schematic configuration diagram of a ventilation unit when a total heat exchange ventilation mode is selected;
FIG. 3 is a schematic configuration diagram of the ventilation unit when an ordinary ventilation mode is selected;
FIG. 4 is a schematic configuration diagram of the ventilation unit when it is not operating;
FIG. 5 is a diagram showing the schematic configuration of a supply air fan motor (or an exhaust air fan motor) and states of connection of units connected to the motor;
FIG. 6 is a schematic configuration diagram of a total heat exchanger;
FIG. 7 is a schematic configuration diagram of a humidification unit;
FIG. 8 is a schematic diagram showing the schematic configuration of a controller and devices connected to the controller;
FIG. 9 is a schematic diagram showing the schematic configuration of a safety control unit;
FIG. 10 is a conceptual diagram of a table that is referenced in processing by the safety control unit;
FIG. 11 is a flowchart showing a flow of processing by the safety control unit;
FIG. 12 is a timing chart showing changes in the states of each part in a case where a first fan has abnormally stopped;
FIG. 13 is a timing chart showing changes in the states of each part in a case where the first fan has abnormally stopped; and
FIG. 14 is a timing chart showing changes in the states of each part in a case where an outside air temperature sensor has failed.

### DESCRIPTION OF EMBODIMENT

An embodiment of the present invention will be described below with reference to the drawings. It should be noted that the following embodiment is a specific example of the present invention, is not intended to limit the technical scope of the claims and can be appropriately changed without departing from the invention. as defined by the appending claim.

### (1) Overview

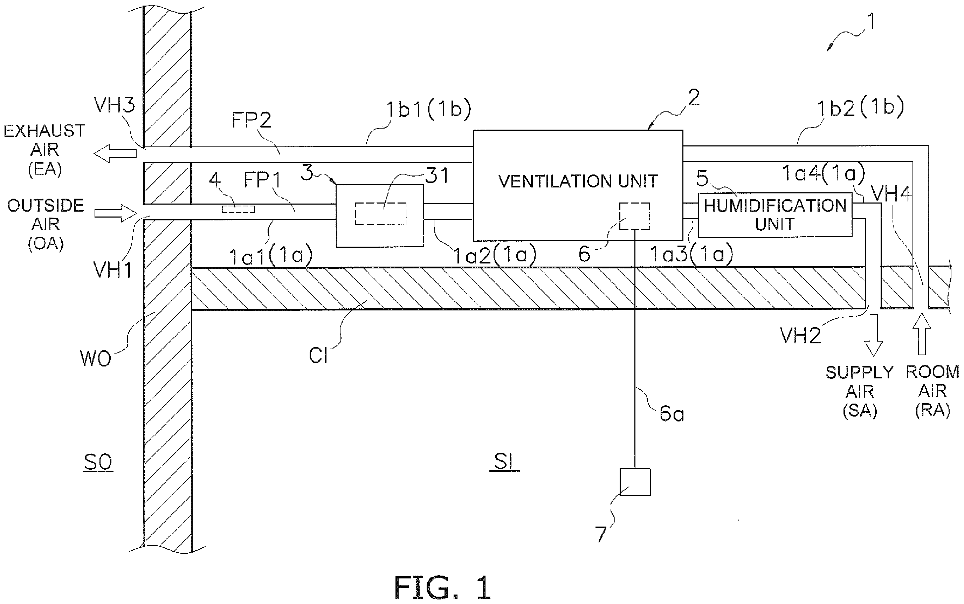

FIG. 1 is an overall configuration diagram of an air conditioning system 1 pertaining to an embodiment of the present invention. The air conditioning system 1 is a system that is installed on the reverse side of a ceiling or in a wall of a house, for example, and ventilates a target space. In the present embodiment, the air conditioning system 1 is disposed above a ceiling CI of an indoor space SI partitioned from an outdoor space SO via an outside wall WO and ventilates the indoor space SI that is the target space. It should be noted that, in the present embodiment, it is assumed that the indoor space SI is a well-sealed space. However, the indoor space SI is not limited to this and may also, for example, be a space that can become well sealed by closing windows and/or doors (not shown in the drawings) formed in the indoor space SI.

The air conditioning system 1 has plural operating modes including an ordinary ventilation mode, a total heat exchange ventilation mode, a heating ventilation mode, and a humidification ventilation mode, and is configured to be able to perform ventilation according to each of the operating mode.

Specifically, when the ordinary ventilation mode is selected by the user, the air conditioning system 1 ventilates the indoor space SI by exhausting room air RA, which is the air in the indoor space SI, as exhaust air EA to the outdoor space SO and supplying outside air OA, which is the air of the outdoor space SO, as supply air SA to the indoor space SI. This is called ordinary ventilation. Furthermore, when the total heat exchange ventilation mode is selected by the user, the air conditioning system 1 performs ventilation while recovering the total heat of the room air RA. This is called total heat exchange ventilation. Furthermore, when the heating ventilation mode is selected by the user, the air conditioning system 1 heats the outside air OA and takes it into the indoor space SI as the supply air SA. This is called heating ventilation. Furthermore, when the humidification ventilation mode is selected by the user, the air conditioning system 1 humidifies the supply air SA and takes it into the indoor space SI. This is called humidification ventilation. It should be noted that, in the air conditioning system 1, it is possible both to individually select each operating mode and to combine and select a plurality of the operating modes.

### (2) Detailed Configuration of Air Conditioning System 1

The air conditioning system 1 is mainly configured from a supply air duct 1 a and an exhaust air duct 1b, a ventilation unit 2, a heating unit 3 (which corresponds to a heating unit), an outside air temperature sensor 4, a humidification unit 5, a controller 6, and an operation panel 7.

### (2-1) Supply Air Duct 1 a and Exhaust Air Duct 1 b

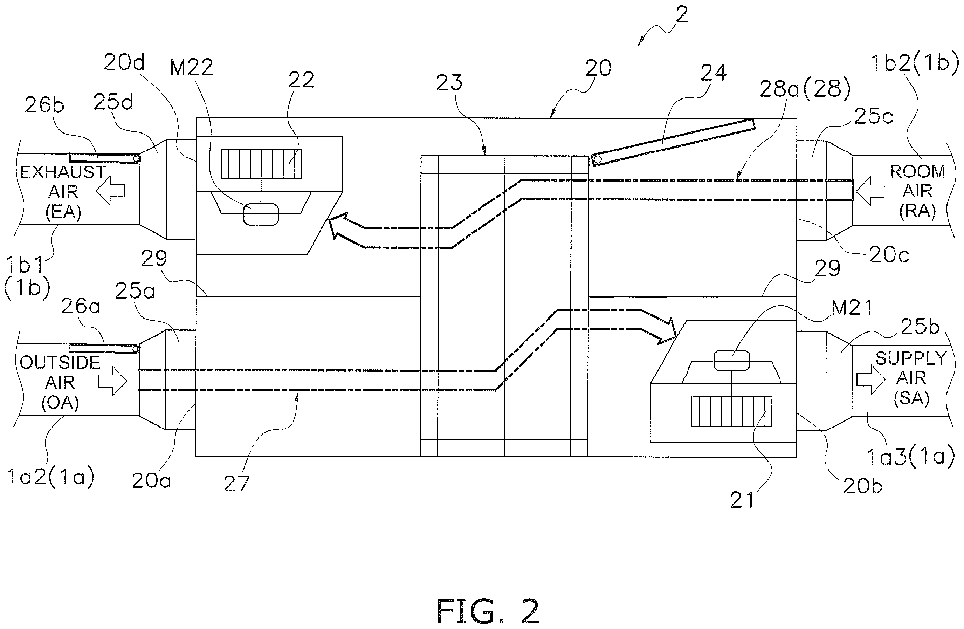

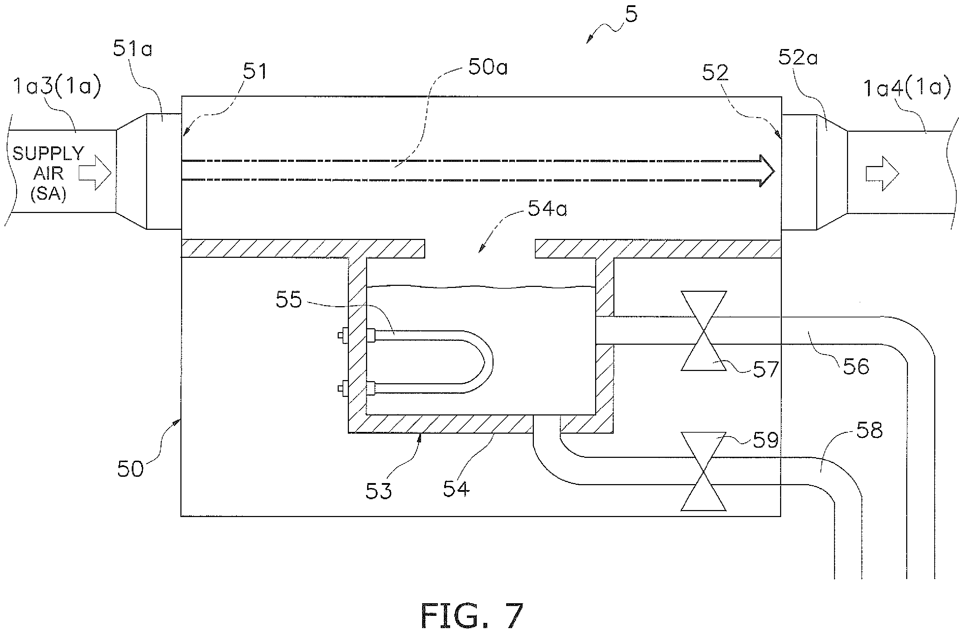

The supply air duct 1 a is configured by an aluminum tube whose vertical cross section is substantially rectangular. A supply air flow path FP1 through which passes the outside air OA is formed inside the supply air duct 1 a. The supply air duct 1 a is mainly configured from four ducts: ducts 1a1, 1a2, 1 a3, and 1 a4. These ducts 1a1 to 1 a4 are disposed in the order of the ducts 1a1, 1 a2, 1 a3, and 1 a4 heading from upstream to downstream of the inflowing outside air OA. One end of the duct 1a1 is connected to a ventilation hole VH1 formed in the outside wall WO and the other end is connected to the heating unit 3. One end of the duct 1 a2 is connected to the heating unit 3 and the other end is connected to an introduction opening 20a (see FIG. 2) in the ventilation unit 2. One end of the duct 1 a3 is connected to a supply air opening 20b (see FIG. 2) in the ventilation unit 2 and the other end is connected to an inflow opening 51 (see FIG. 7) in the humidification unit 5. One end of the duct 1a4 is connected to an outflow opening 52 (see FIG. 7) in the humidification unit 5 and the other end is connected to a ventilation hole VH2 formed in the ceiling CI.

The exhaust air duct 1b is configured by an aluminum tube whose vertical cross section is substantially rectangular. An exhaust air flow path FP2 through which passes the room air RA is formed inside the exhaust air duct 1b. The exhaust air duct 1b is configured from ducts 1b1 and 1b2. These ducts 1b1 and 1b2 are disposed in the order of the ducts 1b2 and 1b1 heading from upstream to downstream of the inflowing room air RA. One end of the duct 1b1 is connected to a ventilation hole VH3 formed in the outside wall WO and the other end is connected to an exhaust air opening 20d (see FIG. 2) in the ventilation unit 2. One end of the duct 1b2 is connected to a return air opening 20c (see FIG. 2) in the ventilation unit 2 and the other end is connected to a ventilation hole VH4 formed in the ceiling CI.

### (2-2) Ventilation Unit 2

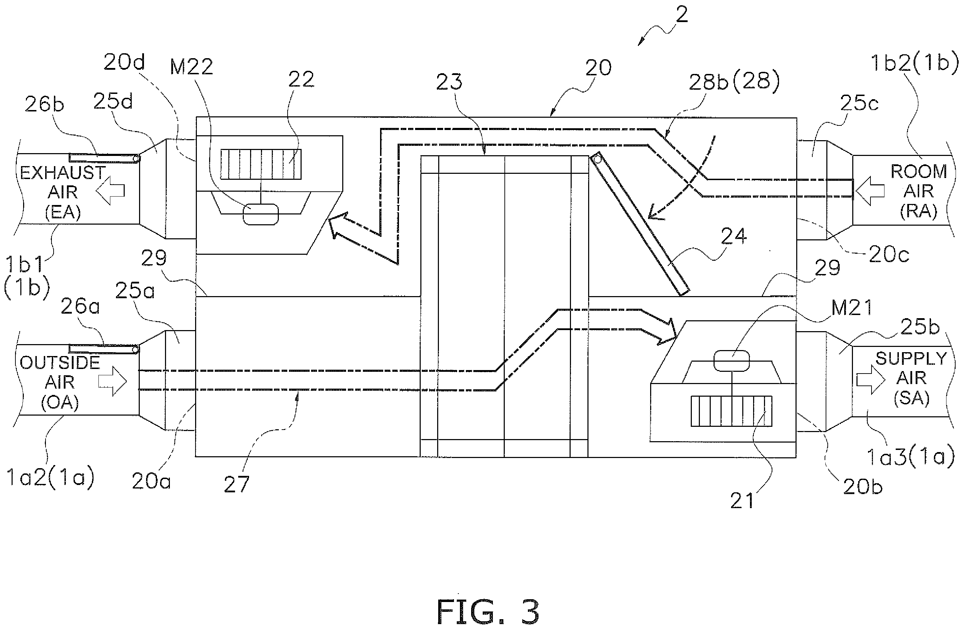

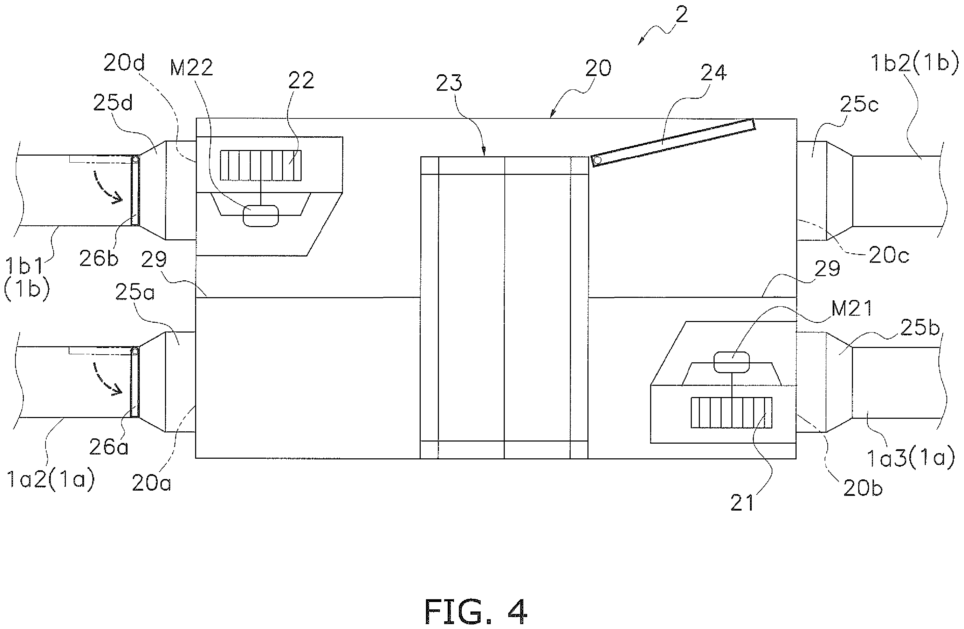

The ventilation unit 2 will be described below with reference to FIG. 1 to FIG. 4. FIG. 2 is a schematic configuration diagram of the ventilation unit 2 when the total heat exchange ventilation mode is selected. FIG. 3 is a schematic configuration diagram of the ventilation unit 2 when the ordinary ventilation mode is selected. FIG. 4 is a schematic configuration diagram of the ventilation unit 2 when it is not operating.

The exterior of the ventilation unit 2 is configured by a casing 20 that has a substantial cuboid shape. The introduction opening 20a, the supply air opening 20b, the return air opening 20c, and the exhaust air opening 20d are formed in the casing 20.

The introduction opening 20a is an opening for introducing the outside air OA into the casing 20. The introduction opening 20a is connected to and communicated with the duct 1a2 via a joint 25a. The supply air opening 20b is an opening for delivering the outside air OA as the supply air SA to side of the humidification unit 5 and the indoor space SI. The supply air opening 20b is connected to and communicated with the duct 1a3 via a joint 25b. The return air opening 20c is an opening for taking the room air RA in the indoor space SI from the indoor space SI into the casing 20. The return air opening 20c is connected to and communicated with the duct 1b2 via a joint 25c. The exhaust air opening 20d is an opening for exhausting the room air RA as the exhaust air EA to the outdoor space SO. The exhaust air opening 20d is connected to and communicated with the duct 1b1 via a joint 25d.

A first external damper 26a is disposed in the joint 25a. Furthermore, a second external damper 26b (hereinafter the first external damper 26a and the second external damper 26b will collectively be called the external dampers 26) is disposed in the joint 25d. The external dampers 26 are open when the air conditioning system 1 is operating (see FIG. 2 and FIG. 3) and closed when the air conditioning system 1 is not operating (see FIG. 4). Because of this, when the air conditioning system 1 is not operating, the outside air OA does not flow into the indoor space SI via the supply air flow path FP1 and the exhaust air flow path FP2.

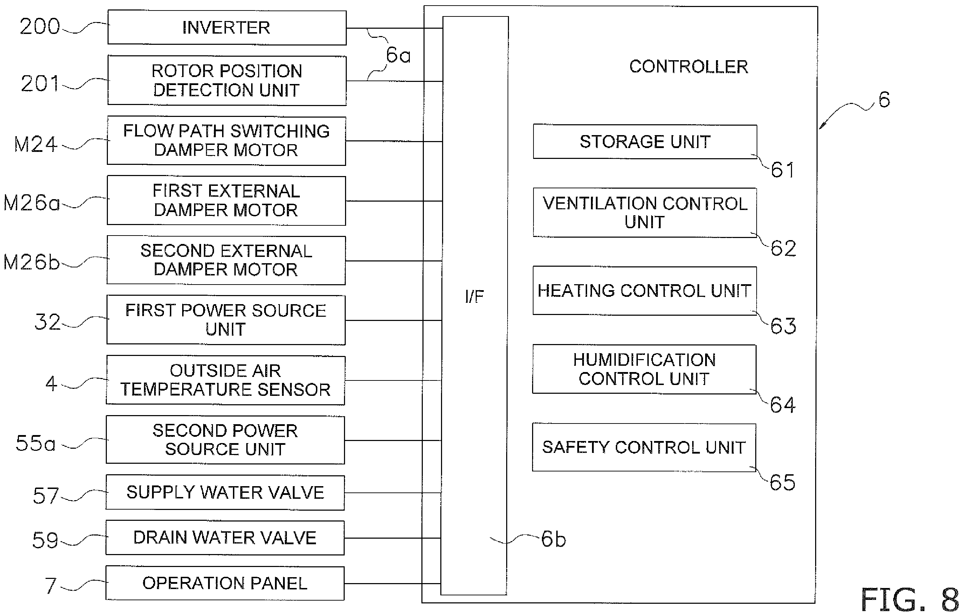

It should be noted that the first external damper 26a is connected to a first external damper motor M26a (see FIG. 8) including such as a stepping motor, for example, and alternates being opened and closed as a result of being driven by the first external damper motor M26a. Likewise, the second external damper 26b is connected to a second external damper motor M26b (see FIG. 8) including such as a stepping motor, for example, and alternates between being opening and closed as a result of being driven by the second external damper motor 26b.

A supply air flow path 27, which communicates the introduction opening 20a and the supply air opening 20b, and either one of a first exhaust air flow path 28a and a second exhaust air flow path 28b, which communicate the return air opening 20c and the exhaust air opening 20d (hereinafter the first exhaust air flow path 28a and the second exhaust air flow path 28b will collectively be called the exhaust air flow path 28), are formed inside the casing 20. Furthermore, an aluminum partition plate 29 is disposed inside the casing 20. The partition plate 29 partitions the supply air flow path 27 and the exhaust air flow path 28 from one another. Because the partition plate 29 is disposed in the ventilation unit 2, the supply air flow path 27 and the exhaust air flow path 28 are not communicated with one another.

A supply air fan 21, an exhaust air fan 22, a total heat exchanger 23, and a flow path switching damper 24, which are constituent elements of the ventilation unit 2, and also a controller 6 are disposed in the casing 20.

### (2-2-1) Supply Air Fan 21 and Exhaust Air Fan 22

The supply air fan 21 is a fan that generates an air flow heading from the outdoor space SO to the indoor space SI via the supply air flow path FP1 and the supply air flow path 27 and the like. That is, the supply air fan 21 takes inside the indoor space SI the outside air OA from the outdoor space SO. The supply air fan 21 is positioned in the neighborhood of the downstream end portion of the supply air flow path 27. The supply air fan 21 is connected to a supply air fan motor M21, and rotates and operates as a result of being driven of the supply air fan motor M21.

The exhaust air fan 22 is a fan that generates an air flow heading from the indoor space SI to the outdoor space SO via the exhaust air flow path FP2 and the exhaust air flow path 28 and the like. That is, the exhaust air fan 22 exhausts to the outdoor space SO the room air RA in the indoor space SI. The exhaust air fan 22 is positioned in the neighborhood of the downstream end portion of the exhaust air flow path 28. The exhaust air fan 22 is connected to an exhaust air fan motor M22, and rotates and operates as a result of being driven of the exhaust air fan motor M22.

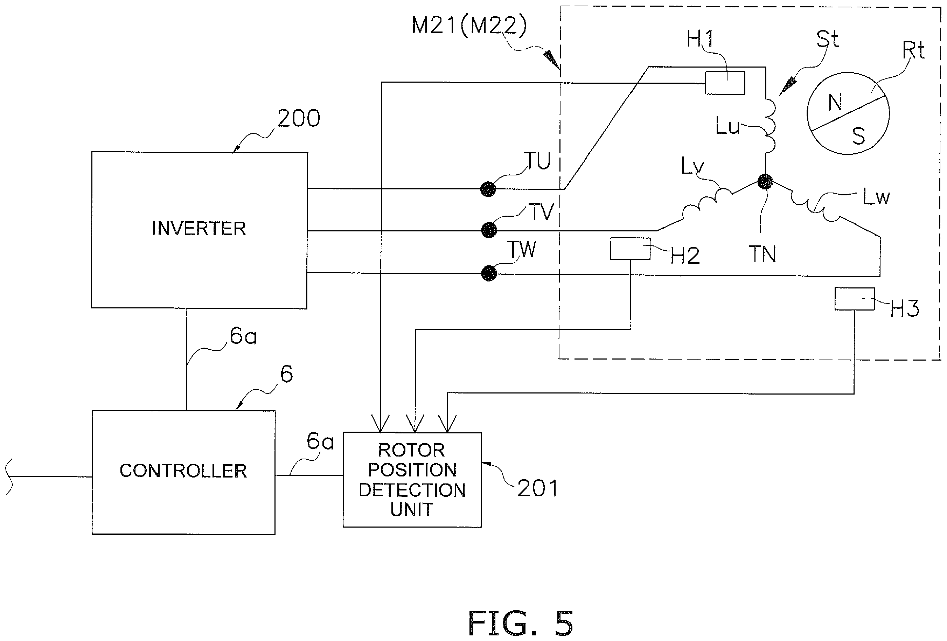

Here, the supply air fan motor M21 and the exhaust air fan motor M22 will be described with reference to FIG. 5. FIG. 5 is a diagram showing the schematic configuration of the supply air fan motor M21 (or the exhaust air fan motor M22) and states of connection of devices connected to the motor.

The supply air fan motor M21 and the exhaust air fan motor M22 are each configured by a 3-phase brushless DC motor. The supply air fan motor M21 and the exhaust air fan motor M22 are each connected via lines 6a to an inverter 200 and the controller 6, and have their actions controlled by the inverter 200 and the controller 6. The supply air fan motor M21 and the exhaust air fan motor M22 each have a stator St and a rotor Rt.

The stator St includes U-phase, V-phase, and W-phase drive coils Lu, Lv, and Lw that are star connected. The drive coils Lu, Lv, and Lw each have one end connected to drive coil terminals TU, TV, and TW, respectively, of U-phase, V-phase, and W-phase lines extending from the inverter 200. The other ends of the drive coils Lu, Lv, and Lw are connected to one another as a terminal TN.

In the stator St, three Hall elements H1, H2, and H3 are disposed near the drive coils Lu, Lv, and Lw, respectively. These Hall elements H1 to H3 convert changes in magnetic flux produced by the rotation of the rotor Rt into voltages and send detection signals to a rotor position detection unit 201. The rotor position detection unit 201 receives the detection signals sent from the Hall elements H1 to H3, detects the position of the rotor Rt, generates position information of the rotor Rt in real time, and transmits the position information to the controller 6.

The rotor Rt includes a permanent magnet having an N pole and an S pole, and rotates about a rotating shaft relative to the stator St. The rotational torque of the rotor Rt is transmitted to the supply air fan motor M21 or the exhaust air fan motor M22 via an output shaft (not shown in the drawings) lying on the same axis as the rotating shaft.

It should be noted that the supply air fan motor M21 and the exhaust air fan motor M22 are configured in such a way that their rotational speeds are switched in stages by the controller 6. Because of this, the set air volumes of the supply air fan 21 and the exhaust air fan 22 can be arbitrarily adjusted, and in the present embodiment the supply air fan 21 and the exhaust air fan 22 are configured in such a way that the user can switch between three stages of air volumes including strong, intermediate, and weak.

### (2-2-2) Total Heat Exchanger 23

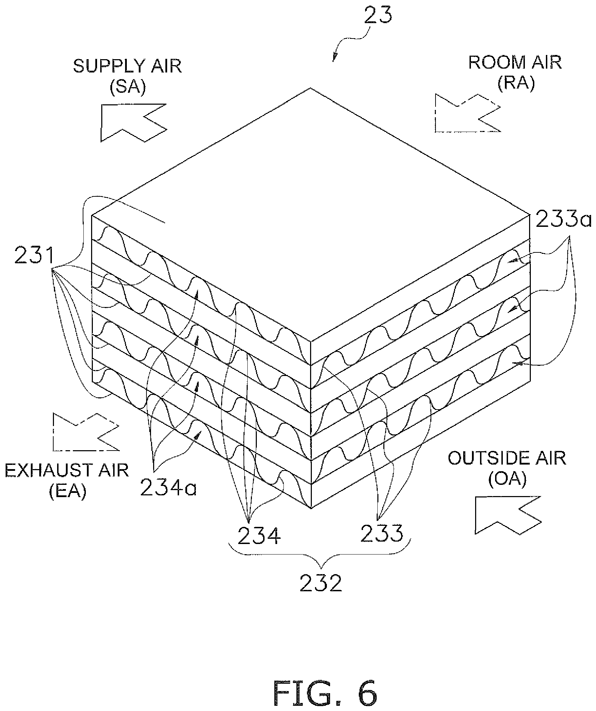

The total heat exchanger 23 will be described below with reference to FIG. 6. FIG. 6 is a schematic configuration diagram of the total heat exchanger 26.

The total heat exchanger 23 performs total heat exchange between the outside air OA and the room air RA inside the total heat exchanger 23, and is utilized in a case where the air conditioning system 1 operates in the total heat exchange ventilation mode. As shown in FIG. 2, the total heat exchanger 23 is positioned on the flows paths of the supply air flow path 27 and the first exhaust air flow path 28a in the neighborhood of the central section inside the casing 20. The total heat exchanger 23 is mainly configured from plural total heat exchange elements 231 and plural corrugated sheet members 232.

The total heat exchange elements 231 are flat sheet-like members that are transmit heat and are permeable to moisture, such as paper, and are numerously stacked a predetermined distance apart from one another in the up and down direction. The corrugated sheet members 232 are corrugated sheet-like members and are disposed alternately with the total heat exchange elements 231 in the stacking direction of the total heat exchange elements 231.

The corrugated sheet members 232 are mainly configured from first corrugated sheet members 233 and second corrugated sheet members 234. The first corrugated sheet members 233 and the second corrugated sheet members 234 are alternately disposed in the stacking direction of the total heat exchange elements 231 (i.e., in the up and down direction) with the total heat exchange elements 231 sandwiched in between. The first corrugated sheet members 233 are in contact at their upper and lower ends with the total heat exchange elements 231, and form first air flow paths 233a through which passes the outside air OA. Furthermore, the second corrugated sheet members 234 are in contact at their upper and lower ends with the total heat exchange elements 231, and form second air flow paths 234a through which passes the room air RA.

The first air flow paths 233a and the second air flow paths 234a formed in this way are positioned in mutually different layers inside the total heat exchanger 23 though they appear to lie at right angles to one another on the plane on which the total heat exchanger 231 extends. Because of this, the outside air OA flowing through the first air flow paths 233a and the room air RA flowing through the second air flow paths 234a undergo total heat exchange without mixing with one another. It should be noted that the first air flow paths 233a configure part of the supply air flow path 27, and that the second air flow paths 234a configure part of the first exhaust air flow path 28a.

### (2-2-3) Flow Path Switching Damper 24

The flow path switching damper 24 shown in FIGS. 2 to 4 is a plate-like member for switching between the first exhaust air flow path 28a and the second exhaust air flow path 28b. The flow path switching damper 24 is positioned between the total heat exchanger 23 and the return air opening 20c.

When the flow path switching damper 24 is open (see FIG. 2), the first exhaust air flow path 28a becomes open and the room air RA passes through the first exhaust air flow path 28a and the second air flow paths 234a. When the flow path switching damper 24 is closed (see FIG. 3), the second exhaust air flow path 28b becomes open and the room air RA passes through the second exhaust air flow path 28b without passing through the second air flow paths 234a. That is, the ventilation unit 2 is configured in such a way that it can switch between total heat exchange ventilation and ordinary ventilation by opening and closing the flow path switching damper 24.

Specifically, when the total heat exchange ventilation mode is selected in the air conditioning system 1, the flow path switching damper 24 is opened and total heat exchange ventilation is performed. Furthermore, when the ordinary ventilation mode is selected, the flow path switching damper 24 is closed and ordinary ventilation is performed. It should be noted that the flow path switching damper 24 is connected to a flow path switching damper motor M24 (see FIG. 8) including a stepping motor, for example, and the flow path switching damper 24 alternates between being opened and closed as a result of being driven by the flow path switching damper motor M24.

### (2-3) Heating Unit 3

The heating unit 3 is for heating the outside air OA taken into the supply air flow path FP1 by the supply air fan 21 in order to prevent the room temperature from being lowered by an inflow of low-temperature outside air OA into the indoor space SI during ventilation operations when the outside air temperature is low, such as in winter. As shown in FIG. 1, in the present embodiment, the heating unit 3 is disposed between the ventilation hole VH1 and the ventilation unit 2, or in other words on the supply air flow path FP1. Specifically, the heating unit 3 is disposed in such a way as to be sandwiched between the ducts 1a1 and 1 a2 in a position closer to the outside wall WO than the ventilation unit 2 (see FIG. 1).

The heating unit 3 has been formed in its main body an inflow opening that allows the outside air OA to flow in and an outflow opening that allows the outside air OA to flow out (not shown in the drawings). The inflow opening is connected to and communicated with the duct 1a1. Furthermore, the outflow opening is connected to and communicated with the duct 1 a2. In this way, because the inflow opening and the outflow opening are connected to the ducts 1a1 or 1 a2 and communicated with the supply air flow path FP1, when the supply air fan 21 is caused to operate, the outside air OA flows from the inflow opening into the main body of the heating unit 3 and flows out from the outflow opening.

A heater 31 that heats the outside air OA that has been taken in is housed inside the main body of the heating unit 3. The heater 31 is a common electric heater that generates Joule heat as a result of being supplied current to a resistor such as a nichrome wire. Although its state of connection is not shown in the drawings, the heater 31 is connected to a first power source unit 32 (see FIG. 8) and is supplied with current. The first power source unit 32 is connected via a line 6a to the controller 6 and supplies current to the heater 31 in accordance with an instruction that is output from the controller 6. It should be noted that, although it is not shown in the drawings, in the heater 31 the resistor is disposed in such a way as to be shielded from the outside air OA in order to restrain corrosion of the resistor.

Because the heating unit 3 is configured in the way described above, the air conditioning system 1 can heat the outside air OA that has been taken in and deliver it to the ventilation unit 2. In other words, the heating unit 3 heats the outside air OA by causing the heat generated as a result of being supplied current inside the heating unit 3 and the outside air OA that has been taken in to exchange heat. Therefore, air that is warm compared to a case where the outside air OA that has been taken in is directly supplied to the ventilation unit 2 is supplied to the ventilation unit 2, and the temperature of the indoor space SI is maintained a certain extent.

It should be noted that, in the present embodiment, the heating unit 3 is set in such a way that it can heat the outside air OA about 5 °C. For example, when, in a case where the heating unit 3 has been driven, an outside air temperature OT that is the temperature of the outside air OA caused to flow into the duct 1a1 by the supply air fan 21 is -15 °C, the heating unit 3 is set in such a way that the outside air OA flows into the ventilation unit 2 in a state in which its temperature is -10 °C. However, the heating degree is not limited to this numerical value and can be arbitrarily changed. The heating degree can be set to an arbitrary value by appropriately selecting the resistor and/or appropriately changing the supplied current value in accordance with the installation environment.

### (2-4) Outside Air Temperature Sensor 4

The outside air temperature sensor 4 is disposed in the duct 1a1. The outside air temperature sensor 4 is configured by a thermistor, for example, and detects the outside air temperature OT. As shown in FIG. 8, the outside air temperature sensor 4 is connected to the controller 6 via a line 6a and appropriately transmits information of the outside air temperature OT to the controller 6.

It should be noted that the outside air temperature sensor 4 does not invariably have to be disposed in the duct 1a1 and may also be disposed in the ventilation hole VH 1, for example.

### (2-5) Humidification Unit 5

FIG. 7 is a schematic configuration diagram of the humidification unit 5. The humidification unit 5 humidifies the supply air SA that is blown out from the ventilation unit 2 to the indoor space SI by using a vapor humidification method utilizing a heater. The exterior of the humidification unit 5 is configured by a casing main body 50.

An inflow opening 51 is formed in the casing main body 50, and the inflow opening 51 is connected to and communicated with the duct 1 a3 via a joint 51 a. Because of this, the supply air SA that is blown out from the supply air opening 20b in the ventilation unit 2 flows into the casing main body 50. Furthermore, an outflow opening 52 is formed in the casing main body 50, and the outflow opening 52 is connected to and communicated with the duct 1 a4 via a joint 52a. In this way, because the inflow opening 51 is connected to the duct 1 a3 and the outflow opening 52 is connected to the duct 1 a4, a supply air flow path 50a heading from the inflow opening 51 to the outflow opening 52 is formed inside the casing main body 50. Thus, the supply air SA flowing into the casing main body 50 is blown out to the indoor space SI via the outflow opening 52 and the duct 1 a4.

A humidification unit 53 that generates vapor is disposed inside the casing main body 50. The humidification unit 53 is mainly configured from a water tank 54 that stores water and a humidification heater 55 that generates vapor by heating the water stored in the water tank 54. An opening 54a connected to the supply air flow path 50a is formed in the upper portion of the water tank 54. The humidification heater 55 is a common electric heater that generates Joule heat as a result of current being supplied thereto. The humidification heater 55 is disposed inside the water tank 54. Although its state of connection is not shown in the drawings, the humidification heater 55 is connected to a second power source unit 55a (see FIG. 8) and is supplied with current.

A supply water pipe 56 is connected to the water tank 54, and water accumulates inside the water tank 54 as a result of water being supplied from the supply water pipe 56. A supply water valve 57 configured by an electromagnetic valve, for example, is disposed in the supply water pipe 56. By opening the supply water valve 57, water is supplied to the inside of the water tank 54. Also, by closing the supply water valve 57, the supply of the water is stopped. Furthermore, a drain water pipe 58 for draining the accumulated water is connected to the water tank 54. A drain water valve 59 configured by an electromagnetic valve, for example, is disposed in the drain water pipe 58. By opening the drain water valve 59, the water inside the water tank 54 is drained. Also, by closing the drain water valve 59, water is accumulated inside the water tank 54. It should be noted that, as shown in FIG. 8, the supply water valve 57 and the drain water valve 59 are connected via lines 6a to the controller 6.

In the humidification unit 5 configured as described above, when the drain water valve 59 is closed and the supply water valve 57 is opened, water is accumulated inside the water tank 54. Additionally, when current is supplied to the humidification heater 55, the water inside the water tank 54 is heated and vaporizes, and the vapor is delivered via the opening 54a to the supply air flow path 50a.

It should be noted that the humidification unit 5 is not limited to using a vapor humidification method utilizing a heater to humidify the supply air SA and may perform humidification by any method. For example, the humidification unit 5 may also perform humidification by a so-called moisture-permeable membrane method using a membrane that transmits water vapor. In addition, the humidification unit 5 may also humidify the supply air SA using a so-called ultrasonic vibration humidification method utilizing an ultrasonic transducer or a so-called centrifugal method utilizing the centrifugal force of a rotating disc.

### (2-6) Controller 6

The controller 6 will be described below with reference to FIG. 1 to FIG. 8. FIG. 8 is a schematic diagram showing the schematic configuration of the controller 6 and devices connected to the controller 6.

The controller 6 is a microcomputer configured from a CPU and a memory and is disposed in the casing 20 of the ventilation unit 2. The controller 6 is connected via lines 6a and an interface 6b to the inverter 200, the rotor position detection unit 201, the flow path switching damper motor M24, the first external damper motor M26a, the second external damper motor M26b, the first power source unit 32, the outside air temperature sensor 4, the second power source unit 55a, the supply water valve 57, the drain water valve 59, and the operation panel 7, and transmits signals to and receives signals from these devices.

It should be noted that the details of the controller 6 will be described in "(3) Details of Controller 6".

### (2-7) Operation Panel 7

The operation panel 7 is a remote controller, which is used as inputting means when the user starts and stops the air conditioning system 1 and selects the operating modes and sets air volumes, and the operation panel 7, is installed in the indoor space SI. The operation panel 7 is disposed with a liquid crystal display that displays to the user the operating state of the air conditioning system 1 (specifically, this includes whether the power is on or off, the operating mode, and the set air volumes), an abnormal stop of the supply air fan 21 and the exhaust air fan 22, and a failure of the outside air temperature sensor 4.

### (3) Details of Controller 6

The controller 6 is configured to control the actions of each part of the air conditioning system 1 in accordance with each operating mode of the air conditioning system 1. The controller 6 is mainly configured from a storage unit 61, a ventilation control unit 62, a heating control unit 63, a humidification control unit 64, and a safety control unit 65. In particular, as described below, the ventilation control unit 62 and the safety control unit 65 are functional units that control the operation of the supply air fan 21 and the exhaust air fan 22, so they can be called a "fan control unit". Furthermore, the heating control unit 63 and the safety control unit 65 are functional units that control the operation of the heating unit 3, so the heating control unit 63 and the safety control unit 65 can together be called a "heating control unit".

### (3-1) Storage Unit 61

The storage unit 61 retains control programs corresponding to each operating mode of the air conditioning system 1. When the user selects an operating mode via the operation panel 7, a signal corresponding to the selected operating mode is transmitted from the operation panel 7 to the controller 6. When this happens, the control program corresponding to the received signal is selected from the storage unit 61. The selected control program is output to the ventilation control unit 62, the heating control unit 63, the humidification control unit 64, and the safety control unit 65.

### (3-2) Ventilation Control Unit 62, Heating Control Unit 63, and Humidification Control Unit 64

The ventilation control unit 62, the heating control unit 63, and the humidification control unit 64 execute the control program output from the storage unit 61 and control the actions of each part of the air conditioning system 1.

For example, in a case where an operation instruction according to the ordinary ventilation mode has been input by the user, the ventilation control unit 62 generates and transmits to the operation panel 7 information indicating to the user that the air conditioning system 1 is operating in the ordinary ventilation mode. Furthermore, the ventilation control unit 62 outputs pulses signals to the first external damper motor M26a and the second external damper motor M26b in order to open the first external damper 26a and the second external damper 26b. In a case where the flow path switching damper 24 is open, the ventilation control unit 62 outputs a pulse signal to the flow path switching damper motor M24 in order to close the flow path switching damper 24 and open the second exhaust air flow path 28b. Thereafter, the ventilation control unit 62 transmits a signal to the inverter 200 in order to cause the supply air fan 21 and the exhaust air fan 22 to operate.

In a case where an operation instruction according to the total heat exchange ventilation mode has been input by the user, the ventilation control unit 62 performs the same process as in the case where an operation instruction according to the ordinary ventilation mode has been input, with the exception of the following process. That is, the ventilation control unit 62 generates and transmits to the operation panel 7 information indicating to the user that the air conditioning system 1 is operating in the total heat exchange ventilation mode. Furthermore, in a case where the flow path switching damper 24 is closed, the ventilation control unit 62 outputs a pulse signal to the flow path switching damper motor M24 in order to open the flow path switching damper 24 and open the first exhaust air flow path 28a.

In a case where an operation instruction according to the heating ventilation mode has been input by the user, the heating control unit 63 generates and transmits to the operation panel 7 information indicating to the user that the air conditioning system 1 is operating in the heating ventilation mode. At the same time, the heating control unit 63 transmits a signal to the first power source unit 32 in order to have it supply current to the heater 31.

In a case where an operation instruction according to the humidification ventilation mode has been input by the user, the humidification control unit 64 generates and transmits to the operation panel 7 information indicating to the user that the air conditioning system 1 is operating in the humidification ventilation mode. At the same time, the humidification control unit 64 supplies current to the drain water valve 59 in order to close the drain water valve 59 and supplies current to the supply water valve 57 in order to open the supply water valve 57. The humidification control unit 64 transmits a signal to the second power source unit 55a in order to have it supply current to the humidification heater 55.

Furthermore, in a case where an instruction for the air conditioning system 1 to stop operating has been input by the user, the ventilation control unit 62 generates and transmits to the operation panel 7 information indicating to the user that the air conditioning system 1 has stopped operating. Additionally, the ventilation control unit 62 transmits to the inverter 200 a signal for stopping the supply of current to the exhaust air fan motor M22 in order to stop the operation of the exhaust air fan 22 (hereinafter this process will be called an exhaust air stop process). At the same time, the heating control unit 63 transmits a signal to the first power source unit 32 to thereby stop the supply of current in order to stop the heating by the heating unit 3 (hereinafter this process will be called a heating stop process). Additionally, the humidification control unit 64 transmits a signal to the second power source unit 55a in order to stop the supply of current to the humidification heater 55. Moreover, the humidification control unit 64 instructs that current be supplied to the supply water valve 57 in order to close the supply water valve 57 and instructs that current be supplied to the drain water valve 59 in order to open the drain water valve 59 (hereinafter this process will be called a humidification stop process). Additionally, the ventilation control unit 62 transmits to the inverter 200 a signal for stopping the supply of current to the supply air fan motor M21 in order to stop the operation of the supply air fan 21 (hereinafter this process will be called a supply air stop process).

It should be noted that the supply air stop process is executed after waiting for the elapse of a predetermined amount of time after the exhaust air stop process, the heating stop process, and the humidification stop process have been executed. In this way, in the present embodiment, the operation of the supply air fan 21 is not immediately stopped even when an instruction to stop operation has been input; rather, the operation of the supply air fan 21 is stopped after waiting for the elapse of the predetermined amount of time. The reason for this is, even when the driving of the heating unit 3 is stopped, the temperature in the heating unit 3 and the supply air duct 1 a continues to rise for a certain amount of time due to residual heat, so by allowing the supply air fan 21 to continue operating for the predetermined amount of time to thereby take the outside air OA into the duct 1a, the heating unit 3 and the supply air duct 1 a are cooled by the outside air OA that has been taken in.

It should be noted that, in the present embodiment, it is assumed that the predetermined amount of time is set to 3 minutes. However, the numerical value of the predetermined amount of time is not limited to 3 minutes and can be appropriately changed in accordance with the type of heater and the installation environment.

After the above process, that is, after the operation of the supply air fan 21 has been stopped, the ventilation control unit 62 transmits pulse signals to the first external damper motor M26a and the second external damper motor M26b in order to close the external dampers 26 (hereinafter this process will be called an external damper closing process). Because of this, in a case where the air conditioning system 1 is not operating, outflow of the room air RA to the outdoor space SO and inflow of the outside air OA to the indoor space SI are restrained.

### (3-3) Safety Control Unit 65

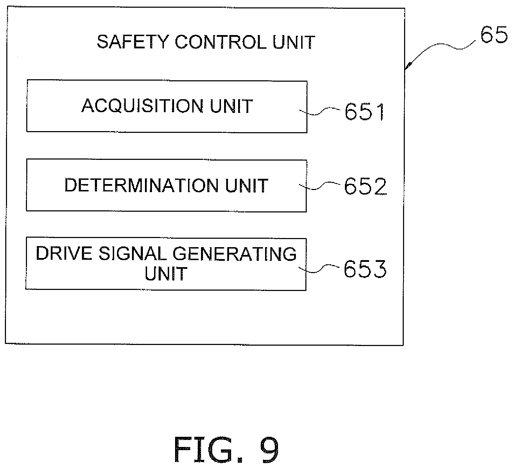

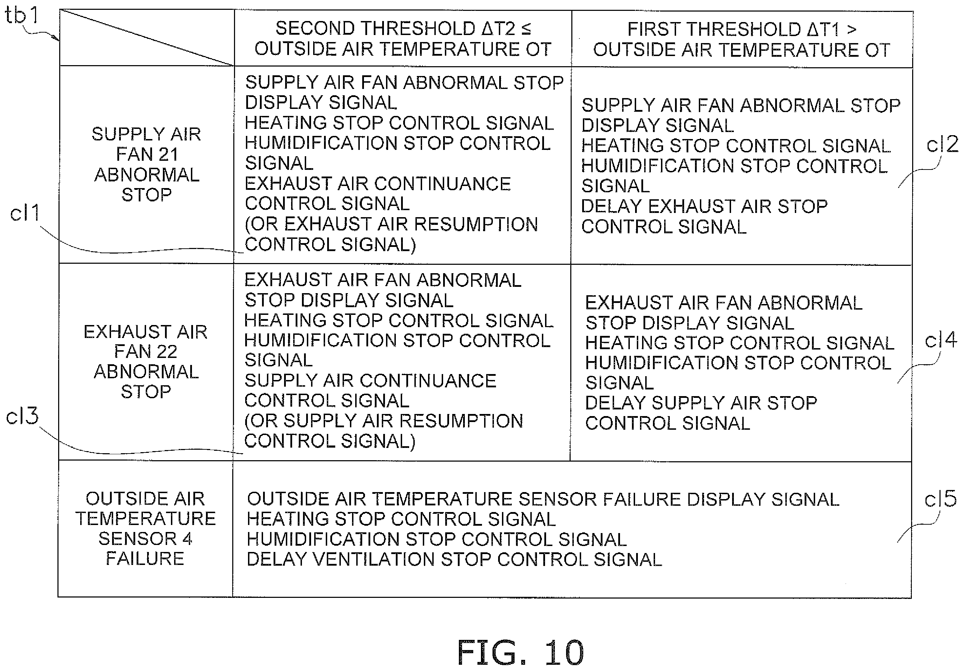

The safety control unit 65 will be described below with reference to FIG. 1 to FIG. 12. FIG. 9 is a schematic diagram showing the schematic configuration of the safety control unit 65. FIG. 10 is a conceptual diagram of a table that is referenced in processing by the safety control unit 65.

The safety control unit 65 receives a safety control program output from the storage unit 61 and executes control. It should be noted that, in the present embodiment, in a case where an instruction for the air conditioning system 1 to start operating has been input by the user, no matter which operating mode is selected the safety control program is output from the storage unit 61 to the safety control unit 65.

The safety control unit 65 is mainly configured from an acquisition unit 651, a determination unit 652, and a drive signal generating unit 653.

### (3-3-1) Acquisition Unit 651

The acquisition unit 651 first acquires the safety control program output from the storage unit 61. Additionally, the acquisition unit 651 acquires the position information of the rotors Rt from the rotor position detection unit 201 in accordance with the safety control program. Furthermore, the acquisition unit 651 acquires the outside air temperature OT from the outside air temperature sensor 4. Additionally, the acquisition unit 651 outputs to the determination unit 652 these sets of information it has acquired.

### (3-3-2) Determination Unit 652

The determination unit 652 determines whether or not a first fan that is either one fan among the supply air fan 21 and the exhaust air fan 22 has abnormally stopped. Specifically, in a case where the position of the rotor Rt is not fluctuating in the position information of the rotor Rt output from the acquisition unit 651, the determination unit 652 determines that the first fan is abnormally stopped. More specifically, in a case where the position of the rotor Rt of the supply air fan motor M21 is not fluctuating, the determination unit 652 determines that the supply air fan 21 serving as the first fan is abnormally stopped. Furthermore, in a case where the position of the rotor Rt of the exhaust air fan motor M22 is not fluctuating, the determination unit 652 determines that the exhaust air fan 22 serving as the first fan is abnormally stopped.

Here, the safety control unit 65, which is equipped with the determination unit 652 that determines an abnormal stop of the first fan and the acquisition unit 651 that acquires the information needed for that determination, can be called an "abnormal stop detection unit" that detects an abnormal stop of the first fan.

It should be noted that the following states correspond to an abnormal stop of the first fan. For example, a state in which the first fan is not being driven to rotate as originally intended despite the fact that current is being supplied to the supply air fan motor M21 or the exhaust air fan motor M22 corresponds to an abnormal stop. Furthermore, for example, a state in which the inverter 200 is unable to sufficiently exercise its function due to a failure or trouble and the first fan is not being driven to rotate as originally intended also corresponds to an abnormal stop.

Furthermore, in a case where the outside air temperature OT exceeds a standard value SV range that is a predetermined numerical value range, the determination unit 652 determines that the outside air temperature sensor 4 has failed. It should be noted that, in the present embodiment, the standard value SV is set to -100 °C to 60 °C, for example.

Furthermore, separate from this, the determination unit 652 determines whether or not the outside air temperature OT is less than a preset first threshold ΔT1 and whether or not it is equal to or greater than a second threshold ΔT2 It should be noted that, in the present embodiment, the first threshold ΔT1 and the second threshold ΔT2 are both set to 0 °C. That is, in the present embodiment, it can be said that the first threshold ΔT1 and the second threshold ΔT2 are both set in the standard value SV range.

The results of the determinations made by the determination unit 652 described above are output to the drive signal generating unit 653.

### (3-3-3) Drive Signal Generating Unit 653

The drive signal generating unit 653 receives the determination results output from the determination unit 652 and generates drive signals that control the actions of each part. Specifically, the drive signal generating unit 653 retains a table tb1 shown in FIG. 10 and, on the basis of the table tb1, generates drive signals for driving the supply air fan 21, the exhaust air fan 22, the heating unit 3, and the humidification unit 5.

The specific processing performed by the drive signal generating unit 653 will be described below with reference to FIG. 10, differentiated between a case where the supply air fan 21 has abnormally stopped, a case where the exhaust air fan 22 has abnormally stopped, and a case where the outside air temperature sensor 4 has failed.

### (3-3-3-1) Case Where Supply Air Fan 21 Has Abnormally Stopped

In a case where the drive signal generating unit 653 has received a determination result indicating that the supply air fan 21 is abnormally stopped (i.e., a case corresponding to cl1 and cl2 in table tb1), the drive signal generating unit 653 generates and transmits to the operation panel 7 a supply air fan abnormal stop display signal. The supply air fan abnormal stop display signal is a signal that causes the operation panel 7 to display to the user the fact that the supply air fan 21 is abnormally stopped. Additionally, the drive signal generating unit 653 generates and outputs to the heating control unit 63 a signal (hereinafter called a heating stop control signal) that causes the heating control unit 63 to execute the heating stop process in order to immediately stop the driving of the heating unit 3. Furthermore, the drive signal generating unit 653 generates and outputs to the humidification control unit 64 a signal (hereinafter called a humidification stop control signal) that causes the humidification control unit 64 to execute the humidification stop process in order to immediately stop the humidification by the humidification unit 5.

The reason why the driving of the heating unit 3 and the humidification unit 5 is immediately stopped in a case where it has received a determination result indicating that the supply air fan 21 is abnormally stopped is as follows. That is, the flow rate of the outside air OA flowing into the supply air duct 1 a drops as a result of the supply air fan 21 no longer operating. If the heating by the heating unit 3 is continued in this state, it may be assumed that the temperature in the heating unit 3 and the supply air duct 1 a will continue to rise, leading to a state that is undesirable in terms of safety. In order to avoid this kind of situation, the driving of the heating unit 3 is immediately stopped. Furthermore, the flow rate of the supply air SA flowing into the humidification unit 5 drops as a result of the supply air fan 21 no longer operating. If the driving of the humidification unit 5 is continued in this state, it may be assumed that the pressure of the vapor in the humidification unit 5 will rise and also that the temperature will rise, leading to a state that is undesirable in terms of safety. In order to avoid this kind of situation, the driving of the humidification unit 5 is immediately stopped.

Thereafter, when the drive signal generating unit 653 has received a determination result indicating that the outside air temperature OT is equal to or greater than the second threshold ΔT2 (in the present embodiment, 0 °C), which corresponds to cl1 in table tb1, the drive signal generating unit 653 continues the operation of a second fan that is the remaining fan excluding the first fan from the supply air fan 21 and the exhaust air fan 22. That is, the drive signal generating unit 653 generates and outputs to the ventilation control unit 62 a signal (hereinafter called an exhaust air continuance control signal) that continues the supply of current to the exhaust air fan motor M22 in order to continue the operation of the exhaust air fan 22 that is the second fan.

The reason why the driving of the exhaust air fan motor M22 is continued in this way is to continue the operation of the exhaust air fan 22 to thereby continue the exhaustion of air from the indoor space SI, make negative pressure inside the indoor space SI, and cause the outside air to flow into the indoor space SI. That is, because the indoor space SI is a well-sealed space, continuing the operation of the exhaust air fan 22 makes negative pressure inside the indoor space SI even in a state in which the supply air fan 21 is not operating. Additionally, the outside air OA flows via the supply air duct 1 a into the indoor space SI in which the negative pressure has been made. Because of this, the ventilation of the indoor space SI is continued.

Furthermore, the reason why the driving of the exhaust air fan motor M22 is continued is also to cause the outside air OA to flow into the duct 1 a to thereby restrain a rise in the temperature in the supply air duct 1 a and the heating unit 3 caused by residual heat after the heating unit 3 is stopped. That is, it is common for the air conditioning system 1 to be equipped with the heating unit 3 for the purpose of heating the outside air OA taken into the supply air flow path FP1 in order to prevent the temperature in the indoor space SI from being lowered by an inflow of low-temperature outside air OA into the indoor space SI during ventilation operations when the outside air temperature is low, such as in winter. However, in a case where the supply air fan 21 has abnormally stopped, the flow of air in the supply air flow path FP1 stagnates, so even if there is an emergency shutdown of the heating by the heating unit 3, there is the concern that the temperature in the heating unit 3 and the supply air flow path FP1 will continue to rise, leading to a state that is undesirable in terms of safety. Therefore, continuing the operation of the exhaust air fan 22 as described above makes negative pressure inside the indoor space SI and the outside air OA flows into the indoor space SI via the supply air duct 1 a. Additionally, the inflowing outside air OA cools the supply air duct 1 a and the heating unit 3 when it passes through the supply air flow path FP1. Because of this, even if the supply air fan 21 abnormally stops, a marked rise in the temperature in the supply air duct 1 a and the heating unit 3 is restrained.

When the drive signal generating unit 653 has received a determination result indicating that the outside air temperature OT is less than the first threshold ΔT1 (which corresponds to cl2 in table tb1), the drive signal generating unit 653 generates and outputs to the ventilation control unit 62 a delay exhaust air stop control signal. Here, the delay exhaust air stop control signal is a signal that causes the ventilation control unit 62 to continue the operation of the exhaust air fan 22 that is the second fan until a predetermined amount of time elapses since it was determined that the outside air temperature OT is less than the first threshold ΔT1 and, after the elapse of the predetermined amount of time, causes the ventilation control unit 62 to execute the exhaust air stop process and the external damper closing process. It should be noted that, in the present embodiment, the predetermined amount of time is set to 9 minutes.

The reason why the operation of the exhaust air fan 22 is stopped and the external dampers 26 is closed after the elapse of the predetermined amount of time (9 minutes) since it was determined that the outside air temperature OT is less than the first threshold ΔT1 is as follows. Namely, this is to restrain a drop in the temperature of the indoor space SI caused by allowing outside air OA having a temperature less than the first threshold ΔT1 (in the present embodiment, 0 °C) to continue to flow into the indoor space SI after the rise in the temperature in the supply air duct 1 a and the heating unit 3 caused by residual heat after the heating unit 3 is stopped has ceased.

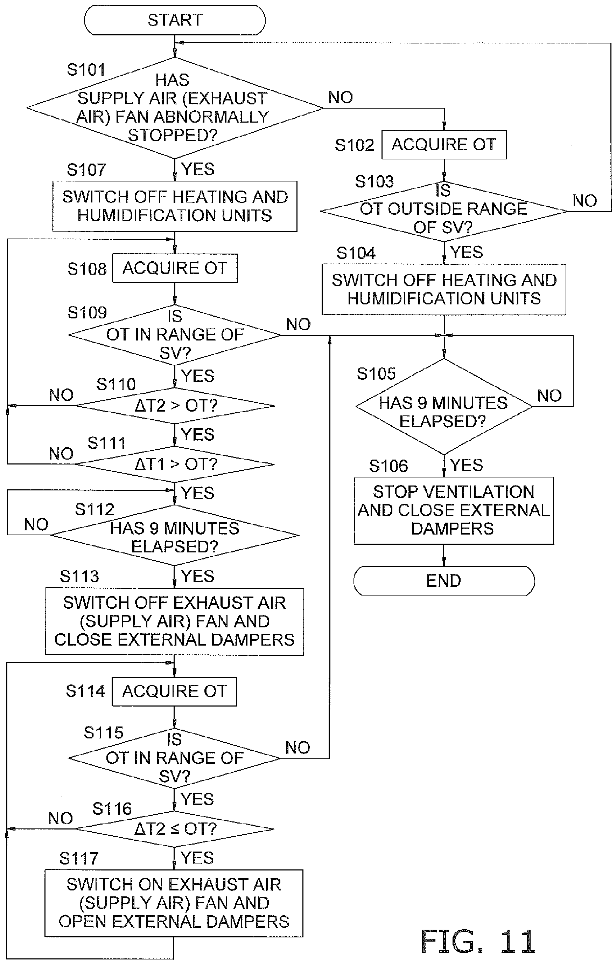

For the same purpose, the drive signal generating unit 653 likewise generates and outputs to the ventilation control unit 62 the delay exhaust air stop control signal also when the drive signal generating unit 653 has received a determination result indicating that the outside air temperature OT is less than the first threshold ΔT1 (which corresponds to cl2 in table tb1) after it has output the exhaust air continuance control signal to the ventilation control unit 62 (see FIG. 11).

Furthermore, when, after the completion of the above processing, the drive signal generating unit 653 has received a determination result indicating that the outside air temperature OT is equal to or greater than the second threshold ΔT2 (which corresponds to cl1 in table tb1), the drive signal generating unit 653 generates and outputs to the ventilation control unit 62 a signal (hereinafter called an exhaust air resumption control signal) that resumes the supply of current to the exhaust air fan motor M22 in order to resume the operation of the exhaust air fan 22. Because of this, the air conditioning system 1 can perform ventilation according to the temperature environment of the outdoor space SO.

### (3-3-3-2) Case Where Exhaust Air Fan 22 Has Abnormally Stopped

In a case where the drive signal generating unit 653 has received a determination result indicating that the exhaust air fan 22 is abnormally stopped (i.e., a case corresponding to cl3 and cl4 in table tb1), the drive signal generating unit 653 generates and transmits to the operation panel 7 an exhaust air fan abnormal stop display signal. The exhaust air fan abnormal stop display signal is a signal that causes the operation panel 7 to display to the user the fact that the exhaust air fan 22 is abnormally stopped. Additionally, the drive signal generating unit 653 generates and outputs to the heating control unit 63 the heating stop control signal in order to immediately stop the driving of the heating unit 3. Furthermore, the drive signal generating unit 653 generates and outputs to the humidification control unit 64 the humidification stop control signal in order to immediately stop the humidification by the humidification unit 5.

Next, when the drive signal generating unit 653 has received a determination result indicating that the outside air temperature OT is equal to or greater than the second threshold ΔT2 (which corresponds to cl3 in table tb1), the drive signal generating unit 653 continues the operation of the second fan that is the remaining fan excluding the first fan from the supply air fan 21 and the exhaust air fan 22. That is, the drive signal generating unit 653 generates and outputs to the ventilation control unit 62 a signal (hereinafter called a supply air continuance control signal) for continuing the supply of current to the supply air fan motor M21 in order to continue the operation of the supply air fan 21 that is the second fan.

The reason why the driving of the supply air fan motor M21 is continued in this way is to continue the operation of the supply air fan 21 to thereby continue the supply of air to the indoor space SI, make positive pressure inside the indoor space SI, and cause the room air RA to flow out to the outdoor space SO via the exhaust air duct 1 b. That is, because the indoor space SI is a well-sealed space, continuing the operation of the supply air fan 21 makes positive pressure inside the indoor space SI so that the room air RA flows out to the outdoor space SO via the exhaust air duct 1 b and the like. Because of this, even if the exhaust air fan 22 abnormally stops, the ventilation of the indoor space SI is continued.

When the drive signal generating unit 653 has received a determination result indicating that the outside air temperature OT is less than the first threshold ΔT1 (which corresponds to cl4 in table tb1), the drive signal generating unit 653 generates and outputs to the ventilation control unit 62 a delay supply air stop control signal. Here, the delay supply air stop control signal is a signal that causes the ventilation control unit 62 to continue the operation of the supply air fan 21 that is the second fan until 9 minutes that is the predetermined amount of time elapses since it was determined that the outside air temperature OT is less than the first threshold ΔT1 and, after the elapse of the predetermined amount of time (9 minutes), causes the ventilation control unit 62 to execute the supply air stop process and the external damper closing process. The reason why the operation of the supply air fan 21 is stopped and the external dampers 26 is closed after the elapse of the predetermined amount of time (9 minutes) since it was determined that the outside air temperature OT is less than the first threshold ΔT1 is as follows. Namely, this is to restrain a drop in the temperature of the indoor space SI caused by allowing outside air OA having a temperature less than the first threshold ΔT1 to continue to flow into the indoor space SI after the rise in the temperature in the supply air duct 1 a and the heating unit 3 caused by residual heat after the heating unit 3 is stopped has ceased.

For the same purpose, the drive signal generating unit 653 likewise generates and outputs to the ventilation control unit 62 the delay supply air stop control signal also when the drive signal generating unit 653 has received a determination result indicating that the outside air temperature OT is less than the first threshold ΔT1 (which corresponds to cl4 in table tb1) after it has output the supply air continuance control signal to the ventilation control unit 62.

Furthermore, when, after the completion of the above processing, the drive signal generating unit 653 has received a determination result indicating that the outside air temperature OT is equal to or greater than the second threshold ΔT2 (which corresponds to cl3 in table tb1), the drive signal generating unit 653 generates and outputs to the ventilation control unit 62 a signal (hereinafter called a supply air resumption control signal) for resuming the supply of current to the supply air fan motor M21 in order to resume the operation of the supply air fan 21. Because of this, the air conditioning system 1 can perform ventilation according to the temperature environment of the outdoor space SO.

### (3-3-3-3) Case Where Outside Air Temperature Sensor 4 Has Failed

In a case where the drive signal generating unit 653 has received a determination result indicating that the outside air temperature sensor 4 has failed (which corresponds to cl5 in table tb1), the drive signal generating unit 653 generates and transmits to the operation panel 7 an outside air temperature sensor failure display signal. The outside air temperature sensor failure display signal is a signal that causes the operation panel 7 to display to the user the fact that the outside air temperature sensor 4 has failed. Additionally, the drive signal generating unit 653 generates and outputs to the heating control unit 63 the heating stop control signal in order to immediately stop the heating by the heating unit 3 regardless of whether the outside air temperature OT is high or low. Furthermore, the drive signal generating unit 653 generates and outputs to the humidification control unit 64 the humidification stop control signal in order to immediately stop the humidification by the humidification unit 5.

Additionally, the drive signal generating unit 653 generates and outputs to the ventilation control unit 62 a delay ventilation stop control signal. Here, the delay ventilation stop control signal is a signal that causes the ventilation control unit 62 to continue the operation of the supply air fan 21 and the exhaust air fan 22 until 9 minutes that is the predetermined amount of time elapses since it was determined that the outside air temperature sensor 4 has failed and, after the elapse of the predetermined amount of time (9 minutes), causes the ventilation control unit 62 to execute the supply air stop process, the exhaust air stop process, and the external damper closing process.

By performing the control described above, in the present embodiment the air conditioning system 1 can be safely stopped even if the outside air temperature sensor 4 fails.

### (4) Flow of Processing by Safety Control Unit 65

An example of a flow of processing by the safety control unit 65 will be described below with reference to FIG. 11. FIG. 11 is a flowchart showing a flow of processing by the safety control unit 65. It should be noted that what follows is an example of processing and that the safety control unit 65 may also execute processing having a flow different from this.

In the present embodiment, the safety control unit 65 performs processing having the flow shown in FIG. 11 when the operation of the air conditioning system 1 is started.

That is, when the air conditioning system 1 starts operating and the acquisition unit 651 acquires the safety control program output from the storage unit 61, first, in step S101, the acquisition unit 651 acquires the position information of the rotors Rt of the supply air fan motor M21 and the exhaust air fan motor M22 from the rotor position detection unit 201 and outputs the position information to the determination unit 652. The determination unit 652 receives the position information and determines whether or not the supply air fan 21 (or the exhaust air fan 22) is abnormally stopped. In a case where this determination is NO (i.e., in a case where the supply air fan 21 (or the exhaust air fan 22) is not abnormally stopped), the safety control unit 65 advances to step S102.

In step S102, the acquisition unit 651 acquires the information of the outside air temperature OT from the outside air temperature sensor 4 and outputs the information to the determination unit 652, and then the safety control unit 65 advances to step S103.

In step S103, the determination unit 652 determines whether or not the outside air temperature OT is outside the standard value SV range. In a case where this determination is NO (i.e., in a case where the outside air temperature OT is in the standard value SV range), the safety control unit 65 returns to step S101. In a case where this determination is YES (i.e., in a case where the outside air temperature OT is outside the standard value SV range), the determination unit 652 determines that the outside air temperature sensor 4 has failed and outputs the determination result to the drive signal generating unit 653. Then, the safety control unit 65 advances to step S104.

In step S104, the drive signal generating unit 653 generates and transmits to the operation panel 7 the outside air temperature sensor failure display signal. Then, the drive signal generating unit 653 generates and outputs to the heating control unit 63 the heating stop control signal. Furthermore, the drive signal generating unit 653 generates and outputs to the humidification control unit 64 the humidification stop control signal. Furthermore, the drive signal generating unit 653 generates and outputs to the ventilation control unit 62 the delay ventilation stop control signal. Then, the safety control unit 65 advances to step S105.

In step S105, the ventilation control unit 62 receives the delay ventilation stop control signal and determines whether or not 9 minutes has elapsed since it was determined that the outside air temperature sensor 4 has failed. In a case where this determination is NO (i.e., in a case where 9 minutes has not yet elapsed), this determination is continued in step S105. In a case where this determination is YES (i.e., in a case where 9 minutes has elapsed), the safety control unit 65 advances to step S106.

In step S106, the ventilation control unit 62 executes the exhaust air stop process, the supply air stop process, and the external damper closing process. Then, after the completion of these processes, the ventilation control unit 62 generates and transmits to the operation panel 7 information indicating to the user the fact that the air conditioning system 1 has undergone an emergency shutdown.

Meanwhile, in step S101, in a case where the determination is YES (i.e., in a case where the supply air fan 21 (or the exhaust air fan 22) is abnormally stopped), the determination unit 652 outputs the determination result to the drive signal generating unit 653. Then, the safety control unit 65 advances to step S107.

In step S107, the drive signal generating unit 653 generates and transmits to the operation panel 7 the supply air fan abnormal stop display signal (or the exhaust air fan abnormal stop display signal). Then, the drive signal generating unit 653 generates and outputs to the heating control unit 63 the heating stop control signal. Furthermore, the drive signal generating unit 653 generates and outputs to the humidification control unit 64 the humidification stop control signal. Then, the safety control unit 65 advances to step S108.

In step S108, the acquisition unit 651 acquires the information of the outside air temperature OT from the outside air temperature sensor 4 and outputs the information to the determination unit 652, and then the safety control unit 65 advances to step S109.

In step S109, the determination unit 652 determines whether or not the outside air temperature OT is in the standard value SV range. In a case where this determination is NO (i.e., in a case where the outside air temperature OT is outside the standard value SV range), the determination unit 652 determines that the outside air temperature sensor 4 has failed and outputs the determination result to the drive signal generating unit 653. Then, the safety control unit 65 returns to step S105. In a case where this determination is YES (i.e., in a case where the outside air temperature OT is in the standard value SV range), the safety control unit 65 advances to step S110.

In step S110, the determination unit 652 determines whether or not the outside air temperature OT is less than the second threshold ΔT2 and outputs the determination result to the drive signal generating unit 653. In a case where the determination is NO (i.e., in a case where the outside air temperature OT is equal to or greater than the second threshold ΔT2), the drive signal generating unit 653 generates and outputs to the ventilation control unit 62 the exhaust air continuance control signal (or the supply air continuance control signal) in order to continue the operation of the exhaust air fan 22 (or the supply air fan 21). Then, the safety control unit 65 returns to step S108. In a case where the determination is YES (i.e., in a case where the outside air temperature OT is less than the second threshold ΔT2), the safety control unit 65 advances to step S111.

In step S111, the determination unit 652 determines whether or not the outside air temperature OT is less than the first threshold ΔT1 and outputs the determination result to the drive signal generating unit 653. In a case where the determination is NO (i.e., in a case where the outside air temperature OT is equal to or greater than the first threshold ΔT1), the safety control unit 65 returns to step S108. In a case where the determination is YES (i.e., in a case where the outside air temperature OT is less than the first threshold ΔT1), the safety control unit 65 advances to step S112.

In step S112, the drive signal generating unit 653 generates and outputs to the ventilation control unit 62 the delay exhaust air stop control signal (or the delay supply air stop control signal). Then, the ventilation control unit 62 receives this and determines whether or not 9 minutes has elapsed since it was determined that the outside air temperature OT is less than the first threshold ΔT1. In a case where this determination is NO (i.e., in a case where 9 minutes has not yet elapsed), this determination is continued in step S112. In a case where this determination is YES (i.e., in a case where 9 minutes has elapsed), the safety control unit 65 advances to step S113.

In step S113, the drive signal generating unit 653 generates and outputs to the ventilation control unit 62 signals that causes the ventilation control unit 62 to execute the exhaust air stop process (or the supply air stop process) and the external damper closing process. Then, the safety control unit 65 advances to step S114.

In step S114, the acquisition unit 651 acquires, and outputs to the determination unit 652, the information of the outside air temperature OT from the outside air temperature sensor 4, and then the safety control unit 65 advances to step S115.

In step S115, the determination unit 652 determines whether or not the outside air temperature OT is in the standard value SV range. In a case where this determination is NO (i.e., in a case where the outside air temperature OT is outside the standard value SV range), the determination unit 652 determines that the outside air temperature sensor 4 has failed and outputs the determination result to the drive signal generating unit 653. Then, the safety control unit 65 returns to step S105. In a case where this determination is YES (i.e., in a case where the outside air temperature OT is in the standard value SV range), the safety control unit 65 advances to step S116.

In step S116, the determination unit 652 determines whether or not the outside air temperature OT is equal to or greater than the second threshold ΔT2 and outputs the determination result to the drive signal generating unit 653. In a case where the determination is NO (i.e., in a case where the outside air temperature OT is less than the second threshold ΔT2), the safety control unit returns to step S114. In a case where the determination is YES (i.e., in a case where the outside air temperature OT is equal to or greater than the second threshold ΔT2), the safety control unit 65 advances to step S117.

In step S117, the drive signal generating unit 653 generates and outputs to the ventilation control unit 62 the exhaust air resumption control signal (or the supply air resumption control signal) in order to resume the operation of the exhaust air fan 22 (or the supply air fan 21). The ventilation control unit 62 receives this and resumes the operation of the exhaust air fan 22 (or the supply air fan 21). Then, the safety control unit 65 returns to step S114.

### (5) Regarding States of Actions of Each Part of Air Conditioning System 1

Here, the states of actions of each part of the air conditioning system 1 will be described, differentiated between a case where the first fan has abnormally stopped and a case where the outside air temperature sensor 4 has failed.

### (5-1) Case Where First Fan Has Abnormally Stopped

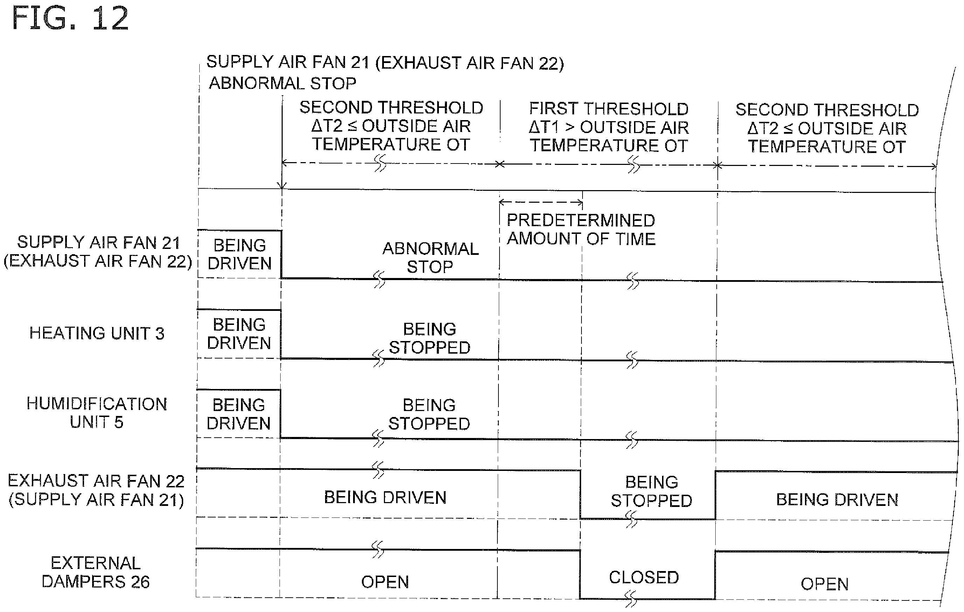

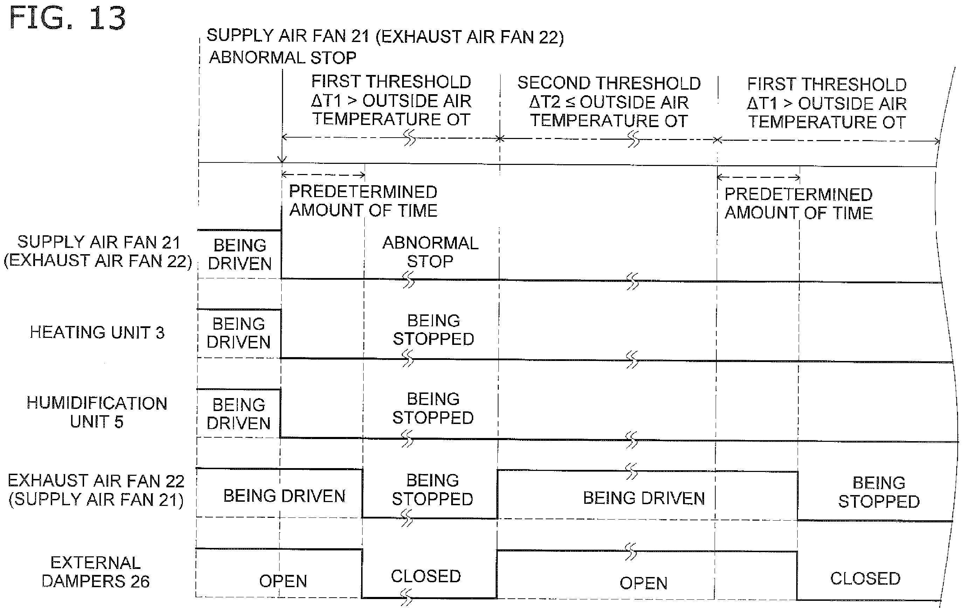

FIG. 12 and FIG. 13 are timing charts showing changes in the states of each part in a case where the first fan has abnormally stopped.

First, description will be given with reference to FIG. 12. FIG. 12 shows a case where the first fan has abnormally stopped in a state in which the air conditioning system 1 is operating in the total heat exchange ventilation mode, the heating ventilation mode, and the humidification ventilation mode (i.e., a state in which the supply air fan 21, the heating unit 3, the humidification unit 5, and the exhaust air fan 22 are being driven and the external dampers 26 are open). In a case where, in this operating state, the supply air fan 21 (or the exhaust air fan 22) serving as the first fan abnormally stops, the heating unit 3 and the humidification unit 5 immediately stop being driven. Additionally, in this case, when the outside air temperature OT is equal to or greater than the second threshold ΔT2, the exhaust air fan 22 (or the supply air fan 21) serving as the second fan continues to be driven.

Thereafter, when the outside air temperature OT becomes less than the first threshold ΔT1, the exhaust air fan 22 (or the supply air fan 21) serving as the second fan stops being driven after the elapse of the predetermined amount of time (in the present embodiment, 9 minutes) since it was determined that the outside air temperature OT is less than the first threshold ΔT1. Furthermore, at the same time that the exhaust air fan 22 (or the supply air fan 21) stops being driven, the external dampers 26 are closed.

Moreover, thereafter, when the outside air temperature OT becomes equal to or greater than the second threshold ΔT2, the external dampers 26 are opened and the exhaust air fan 22 (or the supply air fan 21) serving as the second fan is driven.

Next, description will be given with reference to FIG. 13. FIG. 13 shows a case where, like in FIG. 12, the first fan has abnormally stopped in a state in which the air conditioning system 1 is operating in the total heat exchange ventilation mode, the heating ventilation mode, and the humidification ventilation mode (i.e., a state in which the supply air fan 21, the heating unit 3, the humidification unit 5, and the exhaust air fan 22 are being driven and the external dampers 26 are open). In a case where, in this operating state, the supply air fan 21 (or the exhaust air fan 22) serving as the first fan abnormally stops, the heating unit 3 and the humidification unit 5 immediately stop being driven. Additionally, in this case, when the outside air temperature OT is less than the first threshold ΔT1, the exhaust air fan 22 (or the supply air fan 21) serving as the second fan stops being driven after the elapse of the predetermined amount of time (in the present embodiment, 9 minutes) since it was determined that the outside air temperature OT is less than the first threshold ΔT1. Furthermore, at the same time that the exhaust air fan 22 stops being driven, the external dampers 26 are closed.

Thereafter, when the outside air temperature OT becomes equal to or greater than the second threshold ΔT2, the external dampers 26 are opened and the exhaust air fan 22 (or the supply air fan 21) serving as the second fan is driven.

Moreover, thereafter, when the outside air temperature OT becomes less than the first threshold ΔT1, the exhaust air fan 22 (or the supply air fan 21) serving as the second fan stops being driven after the elapse of the predetermined amount of time (in the present embodiment, 9 minutes) since it was determined that the outside air temperature OT is less than the first threshold ΔT1. Furthermore, at the same time that the exhaust air fan 22 stops being driven, the external dampers 26 are closed.

### (5-2) Case Where Outside Air Temperature Sensor 4 Has Failed

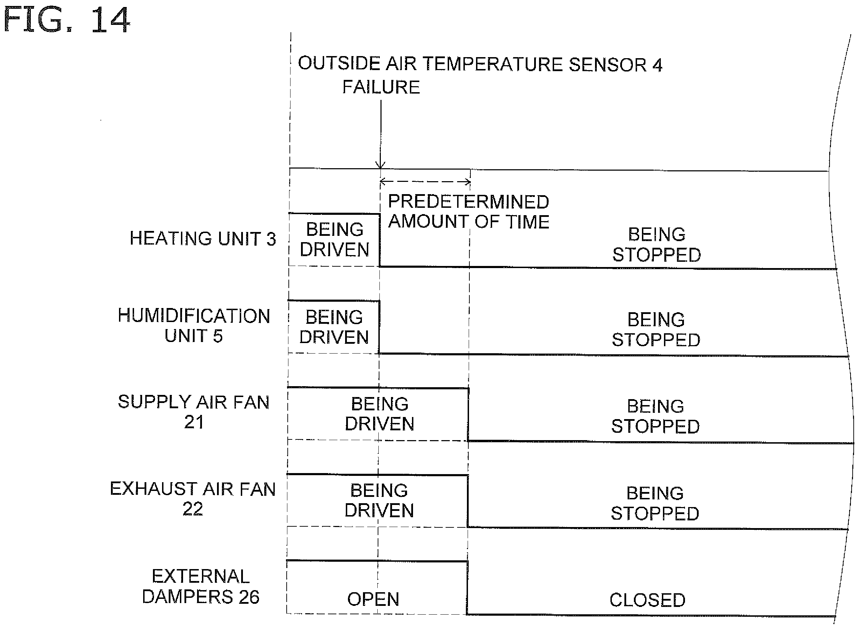

FIG. 14 is a timing chart showing changes in the state of each part in a case where the outside air temperature sensor 4 has failed. FIG. 14 shows, like FIG. 12 and FIG. 13, a state in which the air conditioning system 1 is operating in the total heat exchange ventilation mode, the heating ventilation mode, and the humidification ventilation mode (i.e., a state in which the heating unit 3, the humidification unit 5, the supply air fan 21, and the exhaust air fan 22 are being driven and the external dampers 26 are open).

In a case where, in this operating state, the outside air temperature sensor 4 fails, the heating unit 3 and the humidification unit 5 immediately stop being driven. Then, the supply air fan 21 and the exhaust air fan 22 stop being driven after the elapse of the predetermined amount of time (in the present embodiment, 9 minutes) since it was determined that the outside air temperature sensor 4 has failed. Furthermore, at the same time that the supply air fan 21 and the exhaust air fan 22 stop being driven, the external dampers 26 are closed.

### (6) Characteristics

### (6-1)

In the above embodiment, in a case where the first fan that is either one fan among the supply air fan 21 and the exhaust air fan 22 has abnormally stopped, the safety control unit 65 and the ventilation control unit 62 continue the operation of the second fan that is the remaining fan excluding the abnormally stopped first fan from the supply air fan 21 and the exhaust air fan 22 in order to make negative pressure or positive pressure inside the indoor space SI. Because of this, even if the first fan that is either one fan among the supply air fan 21 and the exhaust air fan 22 abnormally stops due to a failure or the like, negative pressure or positive pressure is made inside the indoor space SI by the operation of the second fan, so that the outside air OA flows into the indoor space SI or the room air RA flows out from the indoor space SI. For this reason, even if the first fan that is either one fan among the supply air fan 21 and the exhaust air fan 22 abnormally stops due to a failure or the like, the air conditioning system 1 can continuously ventilate the indoor space SI, and the reliability of the air conditioning system 1 is improved.

### (6-2)

In the above embodiment, in a case where the supply air fan 21 serving as the first fan has abnormally stopped, the safety control unit 65 and the heating control unit 63 stop the heating by the heating unit 3. Furthermore, in a case where the supply air fan 21 serving as the first fan has abnormally stopped, the safety control unit 65 and the ventilation control unit 62 continue the operation of the exhaust air fan 22 serving as the second fan in order to make negative pressure inside the indoor space SI. Because of this, in a case where the supply air fan 21 has abnormally stopped, negative pressure is made inside the indoor space SI and the outside air OA flows into the indoor space SI. For this reason, even if the supply air fan 21 abnormally stops due to a failure or the like, the air conditioning system 1 can continuously ventilate the indoor space SI, and the reliability of the air conditioning system 1 is improved. Furthermore, the heating unit 3 is cooled by the outside air OA flowing into the supply air flow path FP1, so a marked rise in the temperature in the supply air flow path FP1 and the heating unit 3 is restrained. Consequently, the safety of the air conditioning system 1 equipped with the heating unit 3 is improved.

In particular, it is common for the air conditioning system 1 to be equipped with the heating unit 3 for the purpose of heating the outside air OA taken into the supply air flow path FP1 in order to prevent the temperature in the indoor space SI from being lowered by an inflow of low-temperature outside air OA into the indoor space SI during ventilation operations when the outside air temperature is low, such as in winter. However, in a case where the supply air fan 21 has abnormally stopped, the flow of air in the supply air flow path FP1 stagnates, so even if there is an emergency shutdown of the heating by the heating unit 3, there is the concern that the temperature in the heating unit 3 and the supply air flow path FP 1 will continue to rise, leading to a state that it is undesirable in terms of safety.

However, in the above embodiment, even if the supply air fan 21 abnormally stops, the heating unit 3 is cooled because the outside air OA flows into the supply air flow path FP1. Therefore, a marked rise in the temperature in the supply air flow path FP1 and the heating unit 3 can be restrained, and the reliability and safety of the air conditioning system 1 equipped with the heating unit 3 are improved.

### (6-3)

In the above embodiment, in a case where the first fan that is either one fan among the supply air fan 21 and the exhaust air fan 22 has abnormally stopped, the safety control unit 65 and the heating control unit 63 stop the heating by the heating unit 3 by cutting off the supply of current to the heating unit 3. Because of this, the reliability and safety of the air conditioning system 1 equipped with the heating unit 3 including the heater 31 that is an electric heater are improved.

### (6-4)

In the above embodiment, the safety control unit 65 detects an abnormal stop of the first fan that is either one fan among the supply air fan 21 and the exhaust air fan 22. In a case where an abnormal stop of the first fan has been detected, the safety control unit 65 and the ventilation control unit 62 continue the operation of the second fan that is the remaining fan excluding the abnormally stopped first fan from the supply air fan 21 and the exhaust air fan 22 in order to make negative pressure or positive pressure inside the indoor space SI. Because of this, in a case where the first fan that is either one fan among the supply air fan 21 and the exhaust air fan 22 has abnormally stopped, the air conditioning system 1 can continuously ventilate the indoor space SI with good precision.

### (6-5)

In the above embodiment, when, in a case where an abnormal stop of the first fan that is either one fan among the supply air fan 21 and the exhaust air fan 22 has been detected, the outside air temperature OT detected by the outside air temperature sensor 4 is less than the preset first threshold ΔT1, the safety control unit 65 and the ventilation control unit 62 execute the supply air stop process and the external damper closing process after the elapse of 9 minutes since it was determined that the outside air temperature OT is less than the first threshold ΔT1. That is, the safety control unit 65 and the ventilation control unit 62 continue for the predetermined amount of time (9 minutes) the operation of the second fan that is the remaining fan excluding the first fan that is the abnormally stopped fan from the supply air fan 21 and the exhaust air fan 22 and thereafter stop the operation of the second fan. Because of this, in a case where the first fan that is either one fan among the supply air fan 21 and the exhaust air fan 22 has abnormally stopped, a situation where cool air continuously flows into the indoor space SI and lowers the indoor temperature is restrained. Consequently, even in a case where the first fan that is either one fan among the supply air fan 21 and the exhaust air fan 22 has abnormally stopped, the air conditioning system 1 can perform ventilation with superior comfort.

### (6-6)

In the above embodiment, when, in a case where an abnormal stop of the first fan that is either one fan among the supply air fan 21 and the exhaust air fan 22 has been detected, the outside air temperature OT detected by the outside air temperature sensor 4 becomes equal to or greater than the second threshold ΔT2, the safety control unit 65 and the ventilation control unit 62 resume the operation of the second fan that is the remaining fan excluding the first fan that is the abnormally stopped fan from the supply air fan 21 and the exhaust air fan 22. Because of this, even in a case where the first fan that is either one fan among the supply air fan 21 and the exhaust air fan 22 has abnormally stopped, the air conditioning system 1 can perform ventilation with superior comfort.

### (6-7)

In the above embodiment, when, in a case where an abnormal stop of the first fan that is either one fan among the supply air fan 21 and the exhaust air fan 22 has been detected, the outside air temperature OT detected by the outside air temperature sensor 4 becomes equal to or greater than the preset second threshold ΔT2, the safety control unit 65 and the ventilation control unit 62 continue the operation of the second fan that is the remaining fan excluding the first fan that is the abnormally stopped fan from the supply air fan 21 and the exhaust air fan 22. Furthermore, thereafter, when the outside air temperature OT detected by the outside air temperature sensor 4 becomes less than the first threshold ΔT1, the safety control unit 65 and the ventilation control unit 62 stop the operation of the second fan that is the remaining fan excluding the abnormally stopped first fan from the supply air fan 21 and the exhaust air fan 22 after the elapse of the predetermined amount of time (9 minutes). Because of this, even in a case where the first fan that is either one fan among the supply air fan 21 and the exhaust air fan 22 has abnormally stopped, the air conditioning system 1 can perform ventilation with superior comfort.

### (6-8)

In the above embodiment, when the value of the outside air temperature OT detected by the outside air temperature sensor 4 falls outside the standard value SV range that is a preset predetermined numerical value range, the safety control unit 65 and the heating control unit 63 stop the heating by the heating unit 3. Moreover, the safety control unit 65 and the ventilation control unit 62 stop the operation of the supply air fan 21 and the exhaust air fan 22 after the elapse of the predetermined amount of time (9 minutes). Because of this, in the air conditioning system 1 equipped with the heating unit 3 and the outside air temperature sensor 4, safety can be ensured in a case where the outside air temperature sensor 4 has failed.

### (7) Example Modifications

### (7-1) Example Modification 1A

In the above embodiment, the air conditioning system 1 individually has the ventilation unit 2, the heating unit 3, the outside air temperature sensor 4, and the humidification unit 5, but the air conditioning system 1 is not limited to this. For example, the heating unit 3, the outside air temperature sensor 4, and the humidification unit 5 may also be incorporated inside the ventilation unit 2. Furthermore, the heating unit 3, the outside air temperature sensor 4, and the humidification unit 5 are not invariably necessary and may be appropriately omitted. It should be noted that, in that case, the heating ventilation mode and the humidification ventilation mode are also omitted.

### (7-2) Example Modification 1 B

In the above embodiment, the rotor position detection unit 201 detects the positions of the rotors Rt on the basis of the signals output from the Hall elements H1 to H3, generates position information of the rotors Rt, and sends the position information to the acquisition unit 651 of the safety control unit 65. However, the Hall elements H1 to H3 and the rotor position detection unit 201 are not invariably necessary and may be appropriately omitted. In this case, for example, the ventilation control unit 62 may estimate, using a so-called rotor position sensor-less method, the positions of the rotors Rt of the supply air fan motor M21 and the exhaust air fan motor M22, generate information of the positions of the rotors Rt it has estimated, and send the information to the acquisition unit 651.

### (7-3) Example Modification 1C

In the above embodiment, the total heat exchanger 23 is disposed in the ventilation unit 2, but the ventilation unit 2 is not limited to this. For example, the ventilation unit 2 may also be given a configuration from which the total heat exchanger 23 is omitted. Furthermore, a sensible heat exchanger may also be disposed instead of the total heat exchanger 23.

### (7-4) Example Modification 1 D

In the above embodiment, an electric heater is used for the heater 31 of the heating unit 3, but the heater 31 is not limited to this. For example, the heater 31 may also be a carbon heater, a heat pump type refrigeration device or gas heater.

### (7-5) Example Modification 1 E

In the above embodiment, the controller 6 is disposed in the ventilation unit 2, but the controller 6 is not limited to this. For example, the controller 6 may also be installed in a remote location connected by a network such as a wireless LAN or the Internet to other devices such as the ventilation unit 2 and the heating unit 3. Furthermore, the controller 6 may also be incorporated inside the heating unit 3 or the humidification unit 5, or may be installed in the indoor space SI. Likewise, it is not invariably necessary for each part incorporated in the controller 6, such as the storage unit 61 and the safety control unit 65, to be incorporated inside the controller 6.

### (7-6) Example Modification 1 F

In the above embodiment, the controller 6 is mainly configured from the storage unit 61, the ventilation control unit 62, the heating control unit 63, the humidification control unit 64, and the safety control unit 65, but the controller 6 is not invariably limited to this configuration. For example, the heating control unit 63, the humidification control unit 64, and the safety control unit 65 may be omitted and their functions may be borne by the ventilation control unit 62.

### (7-7) Example Modification 1G

In the above embodiment, in a case where an instruction for the air conditioning system 1 to stop operating has been input by the user, the ventilation control unit 62 executes the exhaust air stop process without waiting for the predetermined amount of time (3 minutes) to elapse, but the ventilation control unit 62 is not limited to this. For example, the ventilation control unit 62 may also be configured to execute the exhaust air stop process after waiting for the predetermined amount of time (3 minutes) like with the supply air stop process.

### (7-8) Example Modification 1 H

In the above embodiment, the safety control unit 65 is mainly configured from the acquisition unit 651, the determination unit 652, and the drive signal generating unit 653, but the safety control unit 65 is not limited to this configuration. That is, it is not invariably necessary for the acquisition unit 651, the determination unit 652, and the drive signal generating unit 653 to be included in the safety control unit 65. For example, the acquisition unit 651 may also be disposed separately from the safety control unit 65, and the determination unit 652 may also be disposed separately from the safety control unit 65.

### (7-9) Example Modification 1I

In the above embodiment, the safety control unit 65 appropriately acquires the safety control program output from the storage unit 61, but the safety control unit 65 is not limited to this and may also retain the safety control program itself. For example, the safety control program may also be stored in the acquisition unit 651 of the safety control unit 65.

### (7-10) Example Modification 1J

In the above embodiment, the safety control unit 65 causes, with the delay supply air stop control signal, the delay exhaust air stop control signal, and the delay ventilation stop control signal that it generates and outputs, the ventilation control unit 62 to execute each process after waiting for the elapse of 9 minutes that is the predetermined amount of time since it was determined that the outside air temperature OT is less than the threshold ΔT1 or that the outside air temperature sensor 4 has failed. However, the predetermined amount of time is not limited to 9 minutes and can be appropriately changed in accordance with the installation environment and design specifications. That is, the predetermined amount of time can be set an appropriate amount of time to be set as a cooling time for restraining a rise in the temperature in the supply air duct 1 a and the heating unit 3 caused by residual heat after the heating unit 3 is stopped; for example, the predetermined amount of time may be set to 6 minutes.

Furthermore, even in a case where the predetermined amount of time (9 minutes) has not elapsed since it was determined that the outside air temperature OT is less than the first threshold ΔT1 or that the outside air temperature sensor 4 has failed, in a case where the predetermined amount of time (9 minutes) has already elapsed since the heating stop process was completed (i.e., in a case where the cooling time after the heating unit 3 is stopped has already elapsed), the safety control unit 65 may cause the ventilation control unit 62 to execute each process without waiting for the elapse of the predetermined amount of time (9 minutes).

Furthermore, the safety control unit 65 may cause the ventilation control unit 62 to execute each process after the elapse of the predetermined amount of time (9 minutes) since the heating stop process was completed rather than since it was determined that the outside air temperature OT is less than the first threshold ΔT1 or that the outside air temperature sensor 4 has failed.

### (7-11) Example Modification 1 K

In the above embodiment, the determination unit 652 determines, on the basis of the position information of the rotors Rt sent from the rotor position detection unit 201, whether or not the supply air fan 21 and the exhaust air fan 22 have abnormally stopped. However, the method of determining whether or not the supply air fan 21 and the exhaust air fan 22 have abnormally stopped is not limited to this, and any method may be employed. For example, the determination of whether or not the supply air fan 21 has abnormally stopped may also be performed on the basis of the value of the outside air temperature OT detected by the outside air temperature sensor 4. In this case, the rotor position detection unit 201 is not invariably necessary.

### (7-12) Example Modification 1 L

In the above embodiment, the standard value SV is set to the numerical value of -100 °C to 60 °C, but the standard value SV is not limited to this and can be appropriately changed in accordance with the design specifications and installation environment. For example, the standard value SV may also be set to -80 °C to 50 °C.

### (7-13) Example Modification 1 M

In the above embodiment, the drive signal generating unit 653 of the safety control unit 65 itself retains the table (FIG. 10), but the table may also be stored in the storage unit 61 and the drive signal generating unit 653 may acquire appropriately from the storage unit 61.

### (7-14) Example Modification 1 N

In the above embodiment, the drive signal generating unit 653 of the safety control unit 65 generates and outputs to the ventilation control unit 62 the supply air continuance control signal and the exhaust air continuance control signal (see cl1 and cl3 in FIG. 10, and step S110 in FIG. 11), but this process may also be omitted. That is, it is not invariably necessary for the drive signal generating unit 653 to generate and output the supply air continuance control signal and the exhaust air continuance control signal.

Furthermore, the drive signal generating unit 653 generates and outputs to the ventilation control unit 62, the heating control unit 63, and the humidification control unit 64 the control signals such as the heating stop control signal, the humidification stop control signal, the exhaust air continuance control signal, the delay exhaust air stop control signal, the exhaust air resumption control signal, the supply air continuance control signal, the delay supply air stop control signal, and the supply air resumption control signal, but it is not invariably necessary for the drive signal generating unit 653 to generate these control signals. In that case, the drive signal generating unit 653 itself performs the heating stop process and the humidification stop process and directly controls the actions of each part of the air conditioning system 1.

### (7-15) Example Modification 1O

In the above embodiment, the first threshold ΔT1 and the second threshold ΔT2 are both set to 0 °C, but the first threshold ΔT1 and the second threshold ΔT2 are not limited to being set to this value and can be appropriately changed in accordance with the installation environment and design specifications. For example, the first threshold ΔT1 and the second threshold ΔT2 may also be set to -5 °C or may also be set to 5 °C. Furthermore, the first threshold ΔT1 and the second threshold ΔT2 may also be set to mutually different values. For example, the first threshold ΔT1 may be set to 0 °C and the second threshold ΔT2 may be set to 5 °C.

### (7-16) Example Modification 1 P

In the above embodiment, in a case where the exhaust air fan 22 serving as the first fan has abnormally stopped, the drive signal generating unit 653 of the safety control unit 65 generates and outputs to the ventilation control unit 62 the heating stop control signal and the humidification stop control signal regardless of the value of the outside air temperature OT. However, the drive signal generating unit 653 may also be configured not to generate and output the heating stop control signal and the humidification stop control signal when, in a case where the exhaust air fan 22 serving as the first fan has abnormally stopped, the outside air temperature OT is equal to or greater than the second threshold ΔT2. That is, the drive signal generating unit 653 may also be configured to continue the driving of the heating unit 3 and the humidification unit 5 when, in a case where the exhaust air fan 22 serving as the first fan has abnormally stopped, the outside air temperature OT is equal to or greater than the second threshold ΔT2.

### INDUSTRIAL APPLICABILITY

The present invention is applicable to a ventilation device equipped with plural fans.

### REFERENCE SIGNS LIST

1 Air Conditioning System (Ventilation Device)
1 a Supply Air Duct
1 b Exhaust Air Duct
2 Ventilation Unit
20 Casing
20a Introduction Opening
20b Supply Air Opening
20c Return Air Opening
20d Exhaust Air Opening
200 Inverter
201 Rotor Position Detection Unit
21 Supply Air Fan
22 Exhaust Air Fan
23 Total Heat Exchanger
24 Flow Path Switching Damper
26a First External Damper
26b Second External Damper
27 Supply Air Flow Path
28a First Exhaust Air Flow Path
28b Second Exhaust Air Flow Path
3 Heating Unit (Heating Unit)
31 Heater
32 First Power Source Unit
4 Outside Air Temperature Sensor
5 Humidification Unit
50a Supply Air Flow Path
51 Inflow Opening
52 Outflow Opening
53 Humidification Unit
54 Water Tank
55 Humidification Heater
55a Second Power Source Unit
56 Supply Water Pipe
57 Supply Water Valve
58 Drain Water Pipe
59 Drain Water Valve
6 Controller
6a Lines
61 Storage Unit
62 Ventilation Control Unit (Fan Control Unit)
63 Heating Control Unit (Heating Control Unit)
64 Humidification Control Unit
65 Safety Control Unit (Fan Control Unit, Heating Control Unit, Abnormal Stop Detection Unit)
651 Acquisition Unit
652 Determination Unit
653 Drive Signal Generating Unit
7 Operation Panel
FP1 Supply Air Flow Path
FP2 Exhaust Air Flow Path
M21 Supply Air Fan Motor
M22 Exhaust Air Fan Motor
M24 Flow Path Switching Damper Motor
M26a First External Damper Motor
M26b Second External Damper Motor
CICeiling
SO Outdoor Space
SI Indoor Space (Target Space)
WO Outside Wall

### CITATION LIST

### <Patent Literature>

Patent Document 1: Japanese Laid-open Patent Publication No. 2005-42955

## Claims

1. A ventilation device (1) for ventilating a target space (SI), the ventilation device comprising:
a supply air fan (21) that takes inside the target space outside air (OA) that is air outside the target space;
an exhaust air fan (22) that exhausts outside (SO) the target space inside air (RA) that is air inside the target space; and
a fan control unit (62, 65) configured to control the operation of the supply air fan and the exhaust air fan,
**characterized in that**
in a case where a first fan that is either one fan among the supply air fan and the exhaust air fan has abnormally stopped, the fan control unit is configured to continue the operation of a second fan that is the remaining fan excluding the first fan from the supply air fan and the exhaust air fan in order to make negative pressure or positive pressure inside the target space.

2. The ventilation device according to claim 1, further comprising:
a heating unit (3) that is disposed on a supply air flow path (FP1) through which passes the outside air taken in by the supply air fan and can heat the outside air taken in by the supply air fan and
a heating control unit (63, 65) configured to control the operation of the heating unit,
wherein
the heating control unit is configured to stop the heating by the heating unit in a case where the first fan has abnormally stopped,
the fan control unit is configured to continue the operation of the second fan in order to make negative pressure inside the target space in a case where the first fan has abnormally stopped,
the first fan is the supply air fan, and
the second fan is the exhaust air fan.

3. The ventilation device according to claim 2, wherein
the heating unit heats the outside air taken in by the supply air fan by causing heat generated as a result of current being supplied inside the heating unit and the outside air taken in by the supply air fan to exchange heat, and
the heating control unit is configured to stop the heating by the heating unit by cutting off the supply of current to the heating unit in a case where the first fan has abnormally stopped.

4. The ventilation device according to any one of claims 1 to 3, further comprising:
an abnormal stop detection unit (65) configured to detect an abnormal stop of the first fan,
wherein the fan control unit is configured to continue the operation of the second fan in a case where the abnormal stop detection unit has detected an abnormal stop of the first fan.

5. The ventilation device according to claim 4, further comprising:
an outside air temperature sensor (4) configured to detect an outside air temperature (OT) that is the temperature of the outside air taken in by the supply air fan,
wherein the fan control unit is configured to continue the operation of the second fan for a predetermined amount of time and thereafter stop it in a case where the abnormal stop detection unit has detected an abnormal stop of the first fan and where the outside air temperature detected by the outside air temperature sensor is less than a preset first threshold (ΔT1).

6. The ventilation device according to claim 5, wherein
the fan control unit resumes the operation of the second fan when the outside air temperature detected by the outside air temperature sensor becomes equal to or greater than a preset second threshold (ΔT2).

7. The ventilation device according to any one of claims 4 to 6, further comprising:
an outside air temperature sensor (4) configured to detect an outside air temperature (OT) that is the temperature of the outside air taken in by the supply air fan,
wherein the fan control unit is configured to continue the operation of the second fan, and thereafter to stop the operation of the second fan after the elapse of a predetermined amount of time when the abnormal stop detection unit has detected an abnormal stop of the first fan and the outside air temperature detected by the outside air temperature sensor is equal to or greater than a preset second threshold ΔT2), and thereafter when the outside air temperature detected by the outside air temperature sensor becomes less than a preset first threshold (ΔT1).

8. The ventilation device according to any one of claims 1 to 7, further comprising:
a heating unit (3) that is disposed on a supply air flow path (FP1) through which passes the outside air taken in by the supply air fan and can heat the outside air taken in by the supply air fan,
a heating control unit (63, 65) configured to control the operation of the heating unit, and
an outside air temperature sensor (4) configured to detect an outside air temperature (OT) that is the temperature of the outside air taken in by the supply air fan,
wherein
the heating control unit is configured to stop the heating by the heating unit when the value of the outside air temperature detected by the outside air temperature sensor falls outside a preset predetermined numerical value range (SV), and
the fan control unit is configured to stop the operation of the supply air fan and the exhaust air fan after the elapse of a predetermined amount of time when the value of the outside air temperature detected by the outside air temperature sensor falls outside the predetermined numerical value range.

## Patentansprüche

1. Belüftungsvorrichtung (1) zum Belüften eines Zielraums (SI), wobei die Belüftungsvorrichtung aufweist:
ein Zuluftventilator (21), der nach innen in den Zielraum Außenluft (OA) aufnimmt, die Luft außerhalb des Zielraums ist;
einen Abluftventilator (22), der nach außen (SO) die Zielrauminnenluft (RA) ausstößt, die Luft innerhalb des Zielraums ist; und
eine Ventilatorsteuereinheit (62, 65), die konfiguriert ist, den Betrieb des Zuluftventilators und des Abluftventilators zu steuern,
**dadurch gekennzeichnet, dass** in einem Fall, wo ein erster Ventilator, der ein Ventilator aus dem Zuluftventilator und dem Abluftventilator heraus ist, anormal gestoppt hat, die Ventilatorsteuereinheit konfiguriert ist, den Betrieb eines zweiten Ventilators fortzusetzen, der der verbleibende Ventilator mit Ausnahme des ersten Ventilators vom Zuluftventilator und vom Abluftventilator ist, um einen negativen Druck oder positiven Druck innerhalb des Zielraums herzustellen.

2. Belüftungsvorrichtung nach Anspruch 1, die ferner aufweist:
eine Heizeinheit (3), die an einem Zuluftstromweg (FP1) angeordnet ist, durch den die Außenluft geht, die durch den Zuluftventilator aufgenommen wird, und die durch den Zuluftventilator aufgenommene Außenluft erwärmen kann, und
eine Heizsteuereinheit (63, 65), die konfiguriert ist, den Betrieb der Heizeinheit zu steuern,
wobei
die Heizsteuereinheit konfiguriert ist, die Erwärmung durch die Heizeinheit in einem Fall zu stoppen, wo der erste Ventilator anormal gestoppt hat,
die Ventilatorsteuereinheit konfiguriert ist, den Betrieb eines zweiten Ventilators fortzusetzen, um in einem Fall, wo der erste Ventilator anormal gestoppt hat, einen negativen Druck innerhalb des Zielraums herzustellen,
der erste Ventilator der Zuluftventilator ist, und der zweite Ventilator der Abluftventilator ist.

3. Belüftungsvorrichtung nach Anspruch 2, wobei die Heizeinheit die durch den Zuluftventilator aufgenommene Außenluft erwärmt, indem sie bewirkt, dass Wärme infolge eines Stroms erzeugt wird, der in die Heizeinheit nach innen zugeführt wird, und dass die durch den Zuluftventilator aufgenommene Außenluft Wärme austauscht, und
die Heizsteuereinheit konfiguriert ist, in einem Fall, wo der erste Ventilator anormal gestoppt hat, die Erwärmung durch die Heizeinheit durch Abschalten der Stromzufuhr zu stoppen.

4. Belüftungsvorrichtung nach einem der Ansprüche 1 bis 3, die ferner aufweist:
eine Einheit (65) zur Ermittlung eines anormalen Stopps, die konfiguriert ist, einen anormalen Stopp des ersten Ventilators zu ermitteln,
wobei die Ventilatorsteuereinheit konfiguriert ist, den Betrieb eines zweiten Ventilators in einem Fall fortzusetzen, wo die Einheit zur Ermittlung eines anormalen Stopps einen anormalen Stopp des ersten Ventilators ermittelt hat.

5. Belüftungsvorrichtung nach Anspruch 4, die ferner aufweist:
einen Außenlufttemperatursensor (4), der konfiguriert ist, eine Außenlufttemperatur (OT) zu ermitteln, die die Temperatur der durch den Zuluftventilator aufgenommenen Außenluft ist,
wobei die Ventilatorsteuereinheit konfiguriert ist, in einem Fall, wo die Einheit zur Ermittlung eines anormalen Stopps einen anormalen Stopp des ersten Ventilators ermittelt hat und wo die durch den
Außenlufttemperatursensor ermittelte Außenlufttemperatur kleiner als ein voreingestellter erster Schwellenwert (ΔT1) ist, den Betrieb des zweiten Ventilators für eine vorgegebene Dauer fortzusetzen und sie danach zu stoppen,.

6. Belüftungsvorrichtung nach Anspruch 5, wobei die Ventilatorsteuereinheit den Betrieb des zweiten Ventilators wieder aufnimmt, wenn die durch den Außenlufttemperatursensor ermittelte Außenlufttemperatur gleich oder größer als ein voreingestellter zweiter Schwellenwert (ΔT2) wird.

7. Belüftungsvorrichtung nach einem der Ansprüche 4 bis 6, die ferner aufweist:
einen Außenlufttemperatursensor (4), der konfiguriert ist, eine Außenlufttemperatur (OT) zu ermitteln, die die Temperatur der durch den Zuluftventilator aufgenommenen Außenluft ist,
wobei die Ventilatorsteuereinheit konfiguriert ist, den Betrieb des zweiten Ventilators fortzusetzen und danach den Betrieb des zweiten Ventilators nach dem Ablauf einer vorgegebenen Dauer zu stoppen, wenn die Einheit zur Ermittlung eines anormalen Stopps einen anormalen Stopp des ersten Ventilators ermittelt hat und die durch den Außenlufttemperatursensor ermittelte Außenlufttemperatur gleich oder größer als ein voreingestellter zweiter Schwellenwert (ΔT2) ist, und danach, wenn die durch den Außenlufttemperatursensor ermittelte Außenlufttemperatur kleiner als ein voreingestellter erster Schwellenwert (ΔT1) wird.

8. Belüftungsvorrichtung nach einem der Ansprüche 1 bis 7, die ferner aufweist:
eine Heizeinheit (3), die an einem Zuluftstromweg (FP1) angeordnet ist, durch den die durch den Zuluftventilator aufgenommene Außenluft geht und die durch den Zuluftventilator aufgenommene Außenluft erwärmen kann, eine Heizsteuereinheit (63, 65), die konfiguriert ist, den Betrieb der Heizeinheit zu steuern, und
einen Außenlufttemperatursensor (4), der konfiguriert ist, eine Außenlufttemperatur (OT) zu ermitteln, die die Temperatur der durch den Zuluftventilator aufgenommenen Außenluft ist,
wobei
die Heizsteuereinheit konfiguriert ist, die Erwärmung durch die Heizeinheit zu stoppen, wenn der Wert der durch den Außenlufttemperatursensor ermittelten Außenlufttemperatur außerhalb eines voreingestellten vorgegebenen numerischen Wertebereichs (SV) fällt, und
die Ventilatorsteuereinheit konfiguriert ist, den Betrieb des Zuluftventilators und des Abluftventilator nach dem Ablauf einer vorgegebenen Dauer zu stoppen, wenn der Wert der durch den Außenlufttemperatursensor ermittelten Außenlufttemperatur außerhalb des vorgegebenen numerischen Wertebereichs fällt.

## Revendications

1. Dispositif de ventilation (1), destiné à la ventilation d'un espace cible (SI), ledit dispositif de ventilation comprenant :
un ventilateur d'alimentation en air (21) introduisant dans l'espace cible de l'air extérieur (OA) qui est un air en dehors de l'espace cible ;
un ventilateur d'extraction d'air (22) évacuant vers l'extérieur (SO) de l'espace cible l'air intérieur (RA) qui est un air compris dans l'espace cible ; et
une unité de commande (62, 65) de ventilateur prévue pour commander le fonctionnement du ventilateur d'alimentation en air et du ventilateur d'extraction d'air,
**caractérisé en ce que**,
en cas d'arrêt anormal du premier ventilateur qui est soit le ventilateur d'alimentation en air soit le ventilateur d'extraction d'air, l'unité de commande de ventilateur est prévue pour continuer à faire fonctionner un deuxième ventilateur qui est le ventilateur restant, autre que le premier ventilateur, qui est soit le ventilateur d'alimentation en air soit le ventilateur d'extraction d'air, afin d'obtenir une pression négative ou une pression positive à l'intérieur de l'espace cible.

2. Dispositif de ventilation selon la revendication 1, comprenant en outre :
une unité de chauffage (3) disposée sur un trajet de flux d'alimentation en air (FP1) par où passe l'air extérieur introduit par le ventilateur d'alimentation en air et pouvant chauffer l'air extérieur introduit par le ventilateur d'alimentation en air, et
une unité de commande de chauffage (63, 65) prévue pour commander le fonctionnement de l'unité de chauffage,
l'unité de commande de chauffage étant prévue pour arrêter le chauffage par l'unité de chauffage en cas d'arrêt anormal du premier ventilateur,
l'unité de commande de ventilateur étant prévue pour continuer à faire fonctionner le deuxième ventilateur afin d'obtenir une pression négative à l'intérieur de l'espace cible en cas d'arrêt anormal du premier ventilateur,
le premier ventilateur étant le ventilateur d'alimentation en air, et
le deuxième ventilateur étant le ventilateur d'extraction d'air.

3. Dispositif de ventilation selon la revendication 2, où l'unité de chauffage chauffe l'air extérieur introduit par le ventilateur d'alimentation en air en provoquant un échange de chaleur entre la chaleur générée résultant du courant alimentant l'intérieur de l'unité de chauffage et l'air extérieur introduit par le ventilateur d'alimentation en air, et l'unité de commande de chauffage est prévue pour arrêter le chauffage de l'unité de chauffage par coupure de l'alimentation en courant de l'unité de chauffage en cas d'arrêt anormal du premier ventilateur.

4. Dispositif de ventilation selon l'une des revendications 1 à 3, comprenant en outre :
une unité de détection d'arrêt anormal (65) prévue pour détecter un arrêt anormal du premier ventilateur,
l'unité de commande de ventilateur étant prévue pour continuer à faire fonctionner le deuxième ventilateur en cas de détection d'un arrêt anormal du premier ventilateur par l'unité de détection d'arrêt anormal.

5. Dispositif de ventilation selon la revendication 4, comprenant en outre :
un capteur de température d'air extérieur (4) prévu pour détecter une température d'air extérieur (OT) qui est la température de l'air extérieur introduit par le ventilateur d'alimentation en air,
l'unité de commande de ventilateur étant prévue pour continuer à faire fonctionner le deuxième ventilateur pendant une durée définie avant d'arrêter celui-ci en cas de détection d'un arrêt anormal du premier ventilateur par l'unité de détection d'arrêt anormal, et de détection par le capteur de température d'air extérieur d'une température d'air extérieur inférieure à un premier seuil fixé (ΔT1).

6. Dispositif de ventilation selon la revendication 5, où l'unité de commande de ventilateur recommence à faire fonctionner le deuxième ventilateur quand la température d'air extérieur détectée par le capteur de température d'air extérieur devient égale ou supérieure à un deuxième seuil fixé (ΔT2).

7. Dispositif de ventilation selon l'une des revendications 4 à 6, comprenant en outre :
un capteur de température d'air extérieur (4) prévu pour détecter une température d'air extérieur (OT) qui est la température de l'air extérieur introduit par le ventilateur d'alimentation en air,
l'unité de commande de ventilateur étant prévue pour continuer à faire fonctionner le deuxième ventilateur, avant d'arrêter le fonctionnement du deuxième ventilateur après écoulement d'une durée définie quand l'unité de détection d'arrêt anormal détecte un arrêt anormal du premier ventilateur et si la température d'air extérieur détectée par le capteur de température d'air extérieur est égale ou supérieure à un deuxième seuil fixé (ΔT2), puis quand la température d'air extérieur détectée par le capteur de température d'air extérieur devient inférieure à un premier seuil fixé (ΔT1).

8. Dispositif de ventilation selon l'une des revendications 1 à 7, comprenant en outre :
une unité de chauffage (3) disposée sur un trajet de flux d'alimentation en air (FP1) par où passe l'air extérieur introduit par le ventilateur d'alimentation en air et
pouvant chauffer l'air extérieur introduit par le ventilateur d'alimentation en air,
une unité de commande de chauffage (63, 65) prévue pour commander le fonctionnement de l'unité de chauffage, et
un capteur de température d'air extérieur (4) prévu pour détecter une température d'air extérieur (OT) qui est la température de l'air extérieur introduit par le ventilateur d'alimentation en air,
l'unité de commande de chauffage étant prévue pour arrêter le chauffage par l'unité de chauffage si la valeur de la température d'air extérieur détectée par le capteur de température d'air extérieur sort d'une plage de valeur numériques prédéfinies (SV) fixée, et
l'unité de commande de ventilateur étant prévue pour arrêter le fonctionnement du ventilateur d'alimentation en air et du ventilateur d'extraction d'air après écoulement d'une durée définie quand la valeur de la température d'air extérieur détectée par le capteur de température d'air extérieur sorte de la plage de valeur numériques prédéfinies.
